# EUROPEAN PATENT APPLICATION

(11) **EP 3 422 618 A1**
(43) Date of publication of application: **02.01.2019**
(21) Application number: 17756231.1
(22) Date of filing: 10.02.2017
(51) Int. Cl.: H04L 1/00

(54) **RECEIVING DEVICE, SENDING DEVICE AND DATA PROCESSING METHOD**

(30) Priority: 26.02.2016 JP 2016035731
(71) Applicant: Sony Corporation, Tokyo 108-0075 (JP)
(72) Inventor: ISHII Michito, Tokyo 108-0075 (JP); MICHAEL Lachlan Bruce, Tokyo 108-0075 (JP); TAKAHASHI Kazuyuki, Tokyo 108-0075 (JP)
(74) Representative: 2SPL Patentanwälte PartG mbB
(86) International application number: PCT/JP2017/004848
(87) International publication number: WO 2017/145790

(57) **Abstract**

The present technology relates to a reception apparatus, a transmission apparatus, and a data processing method that can prevent useless discard of packets.

The reception apparatus performs an error detection process by using an error detection code included in a header of a transport packet. The plurality of transport packets are provided in a payload of a baseband packet that has gone through demodulation. The transport packets include the header and a payload. The header includes the error detection code. The payload has an IP packet provided therein, and the IP packet includes a UDP packet. The present technology is applicable, for example, to data transport compliant with a broadcasting standard such as ATSC 3.0.

## Description

### [Technical Field]

The present technology relates to a reception apparatus, a transmission apparatus, and a data processing method, and particularly to a reception apparatus, a transmission apparatus, and a data processing method that can prevent useless discard of packets.

### [Background Art]

The development of ATSC (Advanced Television Systems Committee) 3.0, one of next generations of terrestrial broadcasting standard, is underway at present (refer, for example, to NPL 1).

### [Citation List]

### [Non Patent Literature]

[NPL 1]
ATSC Candidate Standard: Physical Layer Protocol (Doc. S32-230r21 28 September 2015)

### [Summary]

### [Technical Problem]

Incidentally, although packet-by-packet data transport is prescribed in ATSC 3.0 and other broadcasting standards, there was a time when packets were discarded in the case of an error in packet data. For this reason, proposals have been requested to prevent useless discard of packets even in the event of occurrence of an error in packet data.

The present technology has been devised in light of such circumstances, and it is an object of the present technology to prevent useless discard of packets.

### [Solution to Problem]

A reception apparatus of a first aspect of the present technology includes a processing section that processes a plurality of transport packets provided in a payload of a baseband packet that has gone through demodulation. The transport packets include a header and a payload. The header includes an error detection code. The payload has an IP (Internet Protocol) packet provided therein. The IP packet includes a UDP (User Datagram Protocol) packet. The processing section performs an error detection process by using the error detection code included in the headers of the transport packets.

The reception apparatus of the first aspect of the present technology may be an independent apparatus or an internal block included in a single apparatus. Also, a data processing method of the first aspect of the present technology is a data processing method corresponding to the reception apparatus of the first aspect of the present technology described above.

In the reception apparatus and the data processing method of the first aspect of the present technology, a transport packet is processed. The plurality of transport packets are provided in a payload of a baseband packet that has gone through demodulation. The transport packets include a header and a payload. The header includes an error detection code. The payload has an IP packet provided therein. The IP packet includes a UDP packet. An error detection process is performed by using the error detection code included in the transport packet header.

A transmission apparatus of a second aspect of the present technology includes a processing section that generates a transport packet. The transport packet is provided in a payload of a baseband packet that has yet to go through modulation. The transport packet includes a header and a payload. The header includes an error detection code. The payload has an IP packet provided therein. The IP packet includes a UDP packet. The processing section places the plurality of transport packets in the payload of the baseband packet.

The transmission apparatus of the second aspect of the present technology may be an independent apparatus or an internal block included in a single apparatus. Also, a data processing method of the second aspect of the present technology is a data processing method corresponding to the transmission apparatus of the second aspect of the present technology described above.

In the transmission apparatus and the data processing method of the second aspect of the present technology, a transport packet is generated. The transport packet is provided in a payload of a baseband packet that has yet to go through modulation. The transport packet includes a header and a payload. The header includes an error detection code. The payload has an IP packet provided therein. The IP packet includes a UDP packet. The plurality of transport packets are placed in the payload of the baseband packet.

A reception apparatus of a third aspect of the present technology includes a processing section that processes a baseband packet that has gone through demodulation. The baseband packet includes a header and a payload. The header includes an error detection code. The payload has a plurality of transport packets provided therein. The transport packets include a payload. The payload has an IP packet provided therein. The IP packet includes a UDP packet. The processing section performs an error detection process by using the error detection code included in the header of the baseband packet.

The reception apparatus of the third aspect of the present technology may be an independent apparatus or an internal block included in a single apparatus. Also, a data processing method of the third aspect of the present technology is a data processing method corresponding to the reception apparatus of the third aspect of the present technology described above.

In the reception apparatus and the data processing method of the third aspect of the present technology, a baseband packet that has gone through demodulation is processed. The baseband packet includes a header and a payload. The header includes an error detection code. The payload has a plurality of transport packets provided therein. The transport packets include a payload. The payload has an IP packet provided therein. The IP packet includes a UDP packet. An error detection process is performed by using the error detection code included in the header of the baseband packet.

A transmission apparatus of a fourth aspect of the present technology includes a processing section that generates a transport packet. The transport packet is provided in a payload of a baseband packet that has yet to go through modulation. The transport packet includes a payload. The payload has an IP packet provided therein. The IP packet includes a UDP packet. The processing section places an error detection code in a header of the baseband packet and the plurality of transport packets in the payload of the baseband packet.

The transmission apparatus of the fourth aspect of the present technology may be an independent apparatus or an internal block included in a single apparatus. Also, a data processing method of the fourth aspect of the present technology is a data processing method corresponding to the transmission apparatus of the fourth aspect of the present technology described above.

In the transmission apparatus and the data processing method of the fourth aspect of the present technology, a transport packet is generated. The transport packet is provided in a payload of a baseband packet that has yet to go through modulation. The transport packet includes a payload. The payload has an IP packet provided therein. The IP packet includes a UDP packet. An error detection code is placed in a header of the baseband packet, and the plurality of transport packets are placed in the payload of the baseband packet.

### [Advantageous Effect of Invention]

According to the first to fourth aspects of the present technology, it is possible to prevent useless discard of packets.

It should be noted that the effect described herein is not necessarily limited and may be any of the effects described in this disclosure.

### [Brief Description of Drawings]

FIG. 1 is a diagram illustrating a configuration of an embodiment of a transport system to which the present technology is applied.
FIG. 2 is a diagram illustrating a configuration example of a transmission apparatus.
FIG. 3 is a diagram illustrating a configuration example of a reception apparatus.
FIG. 4 is a diagram illustrating packet correlation used in the present technology.
FIG. 5 is a diagram illustrating a structure of a BB header added to a BB packet.
FIG. 6 is a diagram illustrating an example of an optional field flag.
FIG. 7 is a diagram illustrating an example of syntax of an ALP header of an ALP packet.
FIG. 8 is a diagram illustrating an example of syntax of additional_header_for_single_packet().
FIG. 9 is a diagram illustrating an example of syntax of additional_header_for_segmentation().
FIG. 10 is a diagram illustrating an example of syntax of additional_header_for_concatenation().
FIG. 11 is a diagram illustrating an example of syntax of sub_stream_identification().
FIG. 12 is a diagram illustrating an example of syntax of header_extension().
FIG. 13 is a diagram describing current packet processing.
FIG. 14 is a flowchart describing a flow of current packet processing.
FIG. 15 is a diagram illustrating an example of syntax of the ALP packet.
FIG. 16 is a diagram illustrating an example of packet type.
FIG. 17 is a diagram illustrating an example of syntax of an extension header of the ALP packet.
FIG. 18 is a diagram illustrating an example of extension data type.
FIG. 19 is a diagram illustrating an example of data structure in the case where CRC is provided in extension data.
FIG. 20 is a diagram illustrating other examples of extension data types.
FIG. 21 is a diagram illustrating an example of a structure in the case where CRC is provided in the BB header of the BB packet.
FIG. 22 is a diagram describing packet processing (case 1) of the present technology.
FIG. 23 is a diagram describing packet processing (case 2) of the present technology.
FIG. 24 is a flowchart describing a data processing flow on a transmitting side.
FIG. 25 is a flowchart describing a data processing flow on a receiving side.
FIG. 26 is a flowchart describing a packet processing flow of the present technology.
FIG. 27 is a diagram illustrating a configuration example of a computer.

### [Description of Embodiments]

A description will be given below of an embodiment of the present technology with reference to figures. It should be noted that the description will be given in the following order:

1. System configuration
2. Overview of the current standard
3. Embodiment of the present technology
   (1) First scheme: Providing error detection code in ALP header
   (2) Second scheme: Providing error detection code in BB header
   (3) Packet processing of the present technology
4. Modification example
5. Computer configuration

### <1. System Configuration>

### (Configuration Example of the Transport System)

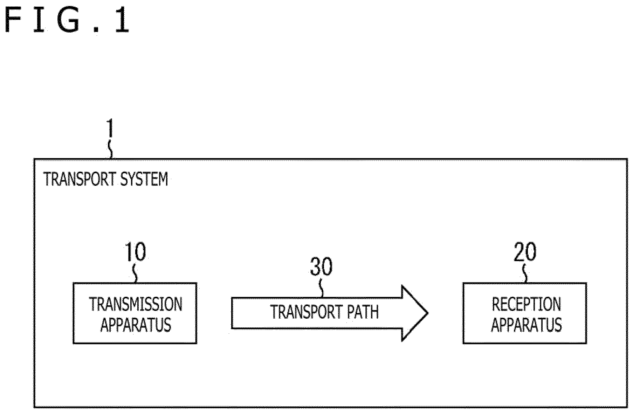

FIG. 1 is a diagram illustrating a configuration of an embodiment of a transport system to which the present technology is applied. It should be noted that a system refers to a logical set of a plurality of apparatuses.

In FIG. 1, a transport system 1 includes a transmission apparatus 10 and a reception apparatus 20. In the transport system 1, data transport compliant with a digital broadcasting standard such as ATSC 3.0 takes place.

It should be noted that it is assumed that ATSC 3.0 will adopt a scheme that mainly uses a UDP/IP packet, i.e., an IP (Internet Protocol) packet that includes a UDP (User Datagram Protocol) packet, rather than a TS (Transport Stream) packet for data transport. Also, there are expectations that schemes using an IP packet will be adopted in the future not only in ATSC 3.0 but also in other broadcasting schemes.

The transmission apparatus 10 sends content via a transport path 30. For example, the transmission apparatus 10 sends a broadcast stream, as a broadcast wave, including video, audio, and so on (components thereof) and signaling included in content such as broadcast programs via the transport path 30.

The reception apparatus 20 receives content sent from the transmission apparatus 10 via the transport path 30 and outputs the content. For example, the reception apparatus 20 receives a broadcast wave sent from the transmission apparatus 10, acquires video, audio, and so on (components thereof) and signaling included in content from a broadcast stream, and reproduces image and voice of broadcast programs and other content.

It should be noted that although only one reception apparatus 20 is depicted in the transport system 1 illustrated in FIG. 1 to facilitate description, the plurality of reception apparatuses 20 can be provided, and a broadcast wave sent (broadcast) by the transmission apparatus 10 can be received simultaneously by the plurality of reception apparatuses 20 via the transport path 30.

Also, in the transport system 1 illustrated in FIG. 1, the plurality of transmission apparatuses 10 can also be provided. Each of the plurality of transmission apparatuses 10 can send a broadcast wave including a broadcast stream, for example, in a separate frequency band as a separate channel, and the reception apparatus 20 allows selection of a channel from which to receive the broadcast stream from among the respective channels of the plurality of transmission apparatuses 10.

Further, in the transport system 1 illustrated in FIG. 1, the transport path 30 may be not only terrestrial wave (terrestrial wave broadcasting) but also satellite broadcasting using a broadcasting satellite (BS) or communications satellite (CS) or wired broadcasting using cables (CATV).

### (Configuration Example of the Transmission Apparatus)

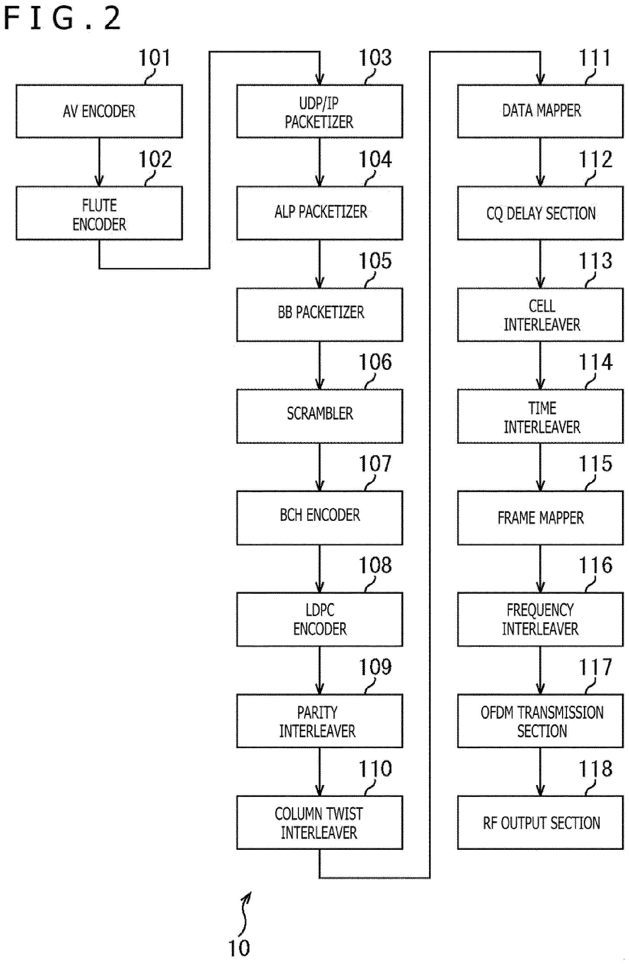

FIG. 2 is a diagram illustrating a configuration example of the transmission apparatus 10 illustrated in FIG. 1.

In FIG. 2, the transmission apparatus 10 includes an AV encoder 101, a FLUTE encoder 102, a UDP/IP packetizer 103, an ALP packetizer 104, a BB packetizer 105, a scrambler 106, a BCH encoder 107, an LDPC encoder 108, a parity interleaver 109, a column twist interleaver 110, a data mapper 111, a CQ delay section 112, a cell interleaver 113, a time interleaver 114, a frame mapper 115, a frequency interleaver 116, an OFDM transmission section 117, and an RF output section 118.

The AV encoder 101 encodes video and audio (component) data in accordance with a given coding scheme and supplies the data to the FLUTE encoder 102. The FLUTE encoder 102 generates data compatible with FLUTE (File Delivery over Unidirectional Transport) format by processing (encoding) the data from the AV encoder 101 and supplies the data to the UDP/IP packetizer 103.

The UDP/IP packetizer 103 generates an IP packet (UDP/IP packet) including a UDP packet by processing the data from the FLUTE encoder 102 and supplies the data to the ALP packetizer 104. The ALP packetizer 104 generates an ALP (ATSC Link layer Protocol) packet by processing the UDP/IP packet from the UDP/IP packetizer 103 and supplies the packet to the BB packetizer 105.

The BB packetizer 105 generates a BB (BaseBand) packet by processing the ALP packet from the ALP packetizer 104 and supplies the packet to the scrambler 106. The scrambler 106 scrambles the data (BB packet) from the BB packetizer 105 and supplies the data acquired therefrom to the BCH encoder 107.

The BCH encoder 107 BCH (Bose-Chaudhuri-Hocquenghem)-codes the data from the scrambler 106 and supplies the data acquired therefrom to the LDPC encoder 108. The LDPC encoder 108 LDPC (Low Density Parity Check)-codes the data from the BCH encoder 107 and supplies the data acquired therefrom to the parity interleaver 109.

The parity interleaver 109 parity-interleaves the data from the LDPC encoder 108 and supplies the data that has gone through parity interleaving to the column twist interleaver 110. The column twist interleaver 110 column-twist-interleaves the data from the parity interleaver 109 and supplies the data that has gone through column twist interleaving to the data mapper 111.

The data mapper 111 performs quadrature modulation (multi-level modulation) by mapping the data from the column twist interleaver 110 onto a signal point representing a single quadrature modulation symbol in units of a sign bit of that data (LDPC code) of one or more bits (in units of a symbol). The data acquired by the process of the data mapper 111 is supplied to the cell interleaver 113 via the CQ delay section 112.

The cell interleaver 113 cell-interleaves the data from the CQ delay section 112 and supplies the data that has gone through cell interleaving to the time interleaver 114. The time interleaver 114 time-interleaves the data from the cell interleaver 113 and supplies the data that has gone through time interleaving to the frame mapper 115.

The frame mapper 115 performs a frame (physical layer frame)-related process on the data from the time interleaver 114 and supplies the data acquired therefrom to the frequency interleaver 116. The frequency interleaver 116 frequency-interleaves the data from the frame mapper 115 and supplies the data that has gone through frequency interleaving to the OFDM transmission section 117.

The OFDM transmission section 117 generates an OFDM (Orthogonal Frequency Division Multiplexing) signal by processing the data from the frequency interleaver 116 and supplies the signal to the RF output section 118. The RF output section 118 is connected to an antenna (not illustrated) and sends the OFDM signal from the OFDM transmission section 117 as a RF (Radio Frequency) signal via the transport path 30.

The transmission apparatus 10 is thus configured.

### (Configuration Example of the Reception Apparatus)

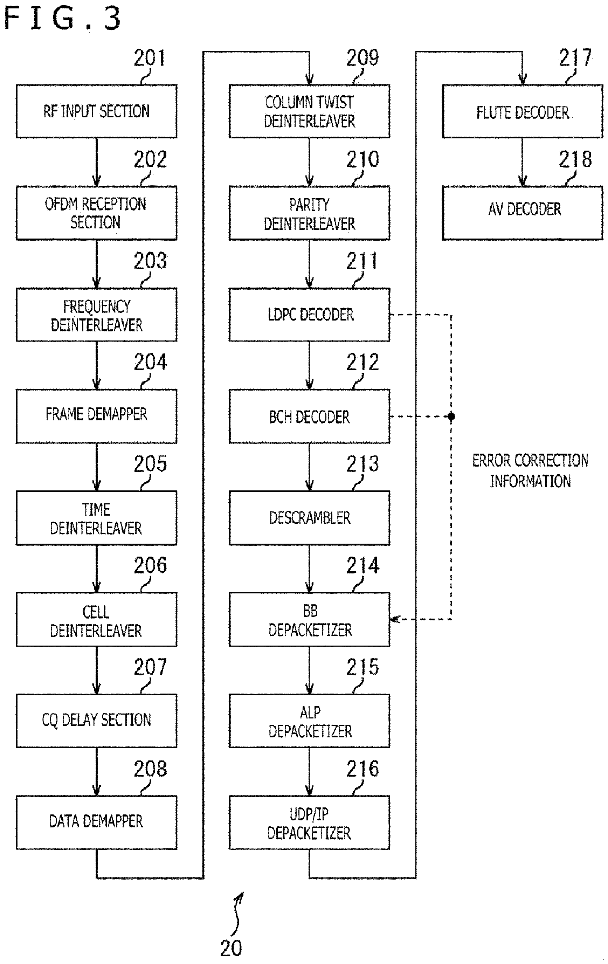

FIG. 3 is a diagram illustrating a configuration example of the reception apparatus 20 illustrated in FIG. 1.

In FIG. 3, the reception apparatus 20 includes an RF input section 201, an OFDM reception section 202, a frequency deinterleaver 203, a frame demapper 204, a time deinterleaver 205, a cell deinterleaver 206, a CQ delay section 207, a data demapper 208, a column twist deinterleaver 209, a parity deinterleaver 210, an LDPC decoder 211, a BCH decoder 212, a descrambler 213, a BB depacketizer 214, an ALP depacketizer 215, a UDP/IP depacketizer 216, a FLUTE decoder 217, and an AV decoder 218.

The RF input section 201 is connected to an antenna (not illustrated), receives an RF signal sent from the transmission apparatus 10 via the transport path 30, and supplies the signal to the OFDM reception section 202 as an OFDM signal. The OFDM reception section 202 processes the OFDM signal from the RF input section 201 and supplies the data acquired therefrom to the frequency deinterleaver 203.

The frequency deinterleaver 203 frequency-deinterleaves the data from the OFDM reception section 202 and supplies the data that has gone through frequency deinterleaving to the frame demapper 204. The frame demapper 204 performs a frame (physical layer frame)-related process on the data from the frequency deinterleaver 203 and supplies the data acquired therefrom to the time deinterleaver 205.

The time deinterleaver 205 time-deinterleaves the data from the frame demapper 204 and supplies the data that has gone through time deinterleaving to the cell deinterleaver 206. The cell deinterleaver 206 cell-deinterleaves the data from the time deinterleaver 205 and supplies the data that has gone through cell deinterleaving to the data demapper 208 via the CQ delay section 207.

The data demapper 208 performs quadrature demodulation by demapping (performing signal point constellation decoding of) the data (data on constellation) from the CQ delay section 207 on the basis of the signal point constellation determined by quadrature modulation performed on the side of the transmission apparatus 10 and supplies the data (LDPC code) acquired therefrom to the column twist deinterleaver 209.

The column twist deinterleaver 209 column-twist-deinterleaves the data from the data demapper 208 and supplies the data that has gone through column twist deinterleaving to the parity deinterleaver 210. The parity deinterleaver 210 parity-deinterleaves the data from the column twist deinterleaver 209 and supplies the data that has gone through parity deinterleaving to the LDPC decoder 211.

The LDPC decoder 211 LDPC-decodes the data from the parity deinterleaver 210 and supplies the data acquired therefrom to the BCH decoder 212. The BCH decoder 212 BCH-decodes the data from the LDPC decoder 211 and supplies the data acquired therefrom to the descrambler 213. The descrambler 213 descrambles the data from the BCH decoder 212 and supplies the data acquired therefrom to the BB depacketizer 214.

The BB depacketizer 214 extracts the BB packet from the data from the descrambler 213, processes the BB packet, and supplies the data acquired therefrom to the ALP depacketizer 215. Also, error correction information is input to the BB depacketizer 214 from the LDPC decoder 211 or the BCH decoder 212. This error correction information is information indicating occurrence of an error in the LDPC or BCH decoding process. The BB depacketizer 214 can recognize the presence of an uncorrectable error in the LDPC or BCH decoding process thanks to error correction information.

The ALP depacketizer 215 extracts the ALP packet from the data from the BB depacketizer 214, processes the ALP packet, and supplies the data acquired therefrom to the UDP/IP depacketizer 216. The UDP/IP depacketizer 216 extracts the UDP/IP packet from the data from the ALP depacketizer 215, processes the UDP/IP packet, and supplies the data acquired therefrom to the FLUTE decoder 217.

The FLUTE decoder 217 processes (decodes) the data from the UDP/IP depacketizer 216 (data compatible with the FLUTE format) and supplies the data acquired therefrom to the AV decoder 218. The AV decoder 218 decodes the data from the FLUTE decoder 217 in accordance with a given decoding scheme and outputs video and audio (component) data acquired therefrom.

The reception apparatus 20 is thus configured.

### <2. Overview of the Current Standard>

### (Packet Correlation Diagram)

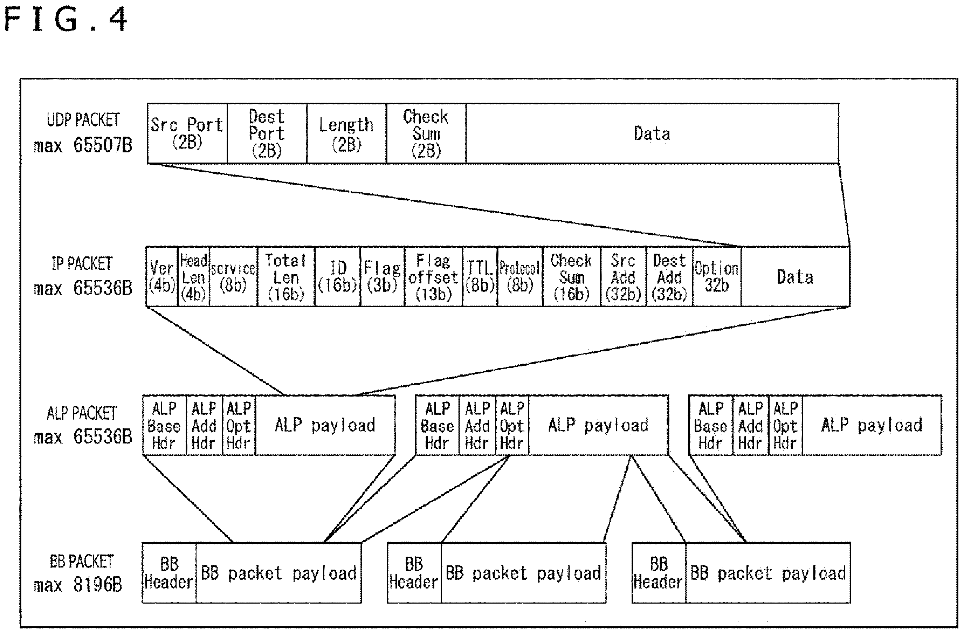

FIG. 4 is a diagram illustrating packet correlation used in the present technology.

In the present technology, a plurality of kinds of packets are used for each layer. A BB (BaseBand) packet is a packet of a baseband layer 1. An ALP (ATSC Link Layer Protocol) packet is a packet of layer 2 (transport packet), the upper layer of layer 1. An IP (Internet Protocol) packet is a packet of layer 3, the upper layer of layer 2. Also, an IP packet includes a UDP (User Datagram Protocol) packet.

A BB packet includes a BB header (BB Header) and a payload (BB packet payload). One or a plurality of ALP packets are provided in the payload of the BB packet. The BB header includes information such as packet length and pointer. This pointer indicates the position of the leading ALP packet provided in the BB packet payload. In the description given below, this pointer will be referred to as a leading ALP pointer.

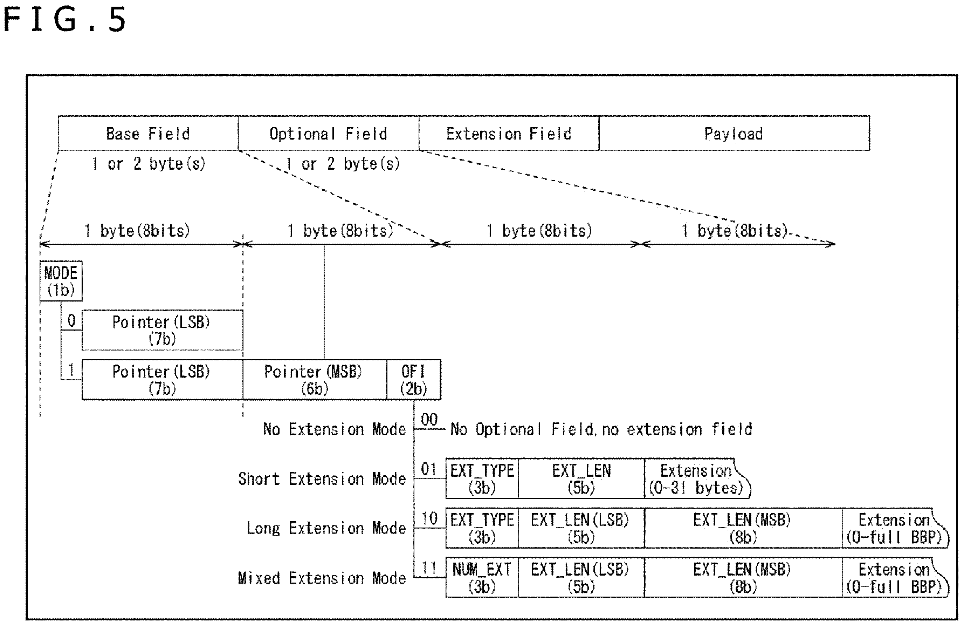

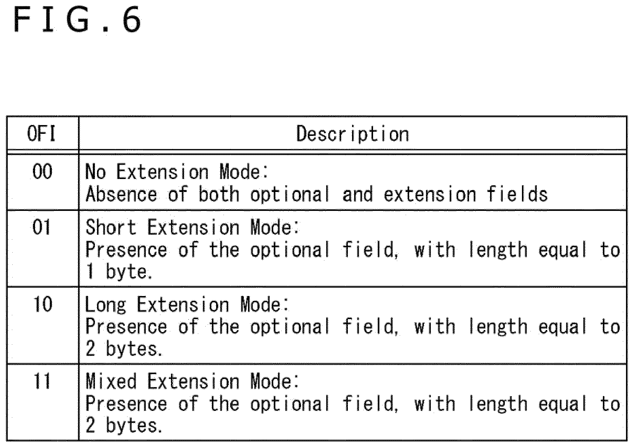

It should be noted that the detailed structure of the BB header of the BB packet will be described later with reference to FIGS. 5 and 6. Also, the maximum BB packet size is 8196 bytes.

An ALP packet includes an ALP header (ALP Header) and a payload (ALP payload). One or a plurality of IP packets are provided in the payload of the ALP packet. The ALP header of the ALP packet includes information such as packet length. Also, an ALP packet is variable in length, and the maximum size thereof is 65536 bytes.

Here, the one or plurality of ALP packets provided in the BB packet payload can be extracted by using the leading ALP pointer of the BB header and the ALP header packet length (packet length of the ALP packet). That is, assuming that, in a BB packet, the position of an ALP packet is identified by using the leading ALP pointer, and even if the ALP packet is provided to spread to the next BB packet, it is possible to identify the position of the next ALP packet by using the ALP header packet length.

For example, FIG. 4 depicts a case in which three ALP packets are provided for three BB packets. Depending on the BB packets, however, an ALP packet exists that is provided to spread across a plurality of BB packets. In this example, the second ALP packet is provided to spread from the first to third BB packets.

In this case, the first (leading) ALP packet is extracted from the payload of the first (leading) BB packet by identifying the position thereof using the leading ALP pointer of the BB header of the first (leading) BB packet. Similarly, the third ALP packet is extracted from the payload of the third BB packet by identifying the position thereof using the leading ALP pointer of the BB header of the third BB packet.

On the other hand, the second ALP packet is extracted from the payloads of the first to third BB packets by identifying the positions corresponding to the packet length from the leading ALP pointer (of the BB header of the first BB packet) using the ALP header packet lengths of the first and second ALP packets. It should be noted that because no leading position of an ALP packet exists in the second BB packet in this example, the value of the leading ALP pointer of the BB header of the second BB packet is "0."

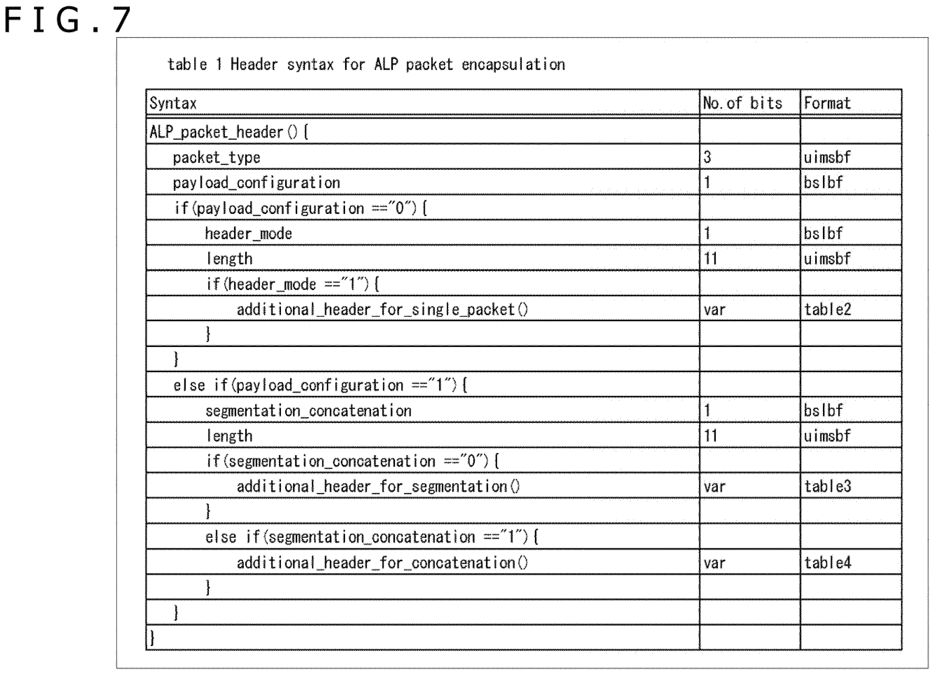

It should be noted that, as ALP headers of ALP packets, not only an ALP packet header (ALP_packet_header), a basic header (ALP Base Hdr) but also an additional header (additional_header), an additional header (ALP Add Hdr) and an extension header (header_extension), an optional header (ALP Opt Hdr), can be provided. It should be noted that the detailed structure of the ALP header of the ALP packet will be described later with reference to FIGS. 7 to 12.

An IP packet includes an IP header (IP Header) and a data portion (Data). A UDP packet is provided in the data portion of the IP packet. The IP header of the IP packet has Version(Ver), Header Length(Head Len), Service, Total Length(Total Len), ID, Flag, Flag offset, TTL(Time To Live), Protocol, Checksum, Source IP address(Src Add), Destination IP address(Dest Add), and Option. It should be noted that the maximum IP packet size is 65536 bytes.

A UDP packet includes a UDP header (UDP Header) and a data portion (Data). Video, audio, and other components and signaling data are provided in the data portion of the UDP packet. The UDP header of the UDP packet has Source port number(Src Port), Destination port number(Dest Port), Length, and Checksum. It should be noted that the maximum UDP packet size is 65507 bytes.

### (Structure of the BB Header)

FIG. 5 is a diagram illustrating a structure of a BB header added to a BB packet.

In FIG. 5, the BB packet includes a BB header and a payload (Payload). Not only a 1- or 2-byte base field (Base Field) but also an optional field (Optional Field) and an extension field (Extension Field) can be provided in the BB header.

That is, in the case where "0" is set as a 1-bit mode (MODE) in the base field, a 7-bit pointer (Pointer(LSB)) is provided. This pointer is the leading ALP packet described above and indicates the position of the leading ALP packet provided in the BB packet payload. For example, in the case where data of the ALP packet provided last in a BB packet is provided to spread to the next BB packet, it is possible to set the position of the leading ALP packet provided in the next BB packet as a leading ALP pointer.

Also, in the case where "1" is set as the mode (MODE), not only a 7-bit pointer (Pointer(LSB)) but also a 6-bit pointer (Pointer(MSB)) and a 2-bit optional flag (OPTI: OPTIONAL) are provided. The optional flag is information indicating whether the header is extended by providing an optional field (Optional Field) and an extension field (Extension Field).

Here, in the case where no optional and extension fields are extended as illustrated in FIG. 6, "00" is set in the optional flag. Also, in the case where a 1-byte optional field and an extension field are extended, "01" is set in the optional flag. As a result, short extension mode (Short Extension Mode) is selected. On the other hand, in the case where a 2-byte optional field and an extension field are extended, "10" or "11" is set in the optional flag, causing long extension mode (Long Extension Mode) or mixed extension mode (Mixed Extension Mode) to be selected.

Referring back to the description of FIG. 5, a 3-bit extension type (EXT_TYPE) is set at the beginning of the optional field. An extension field type (Extension type) is set as this extension type. In the case of short extension mode, the extension type (EXT_TYPE) is followed by a 5-bit extension data length (EXT_LEN) and 0- to 31-byte extension data (Extension).

In the case of long extension mode, the extension type (EXT_TYPE) is followed by a 5-bit extension data length (EXT_LEN(LSB)), an 8-bit extension data length (EXT_LEN(MSB)), and 0 to full BBP extension data (Extension). It should be noted that mixed extension mode is basically similar to long extension mode. Therefore, the description thereof is omitted.

The BB head structure has been described above. A description will be given next of the ALP header added to the ALP packet with reference to FIGS. 7 to 12.

### (Structure of the ALP Header)

FIG. 7 is a diagram illustrating an example of syntax of an ALP header.

The 3-bit packet_type indicates the packet type of the ALP packet. "0" or "1" is set in the 1-bit payload_configuration in accordance with information set in the ALP header.

In the case where "0" is specified as payload_configuration, header_mode and length are provided in the ALP header. The 1-bit header_mode indicates the header mode. The 11-bit length indicates the packet length of the ALP packet (ALP packet length).

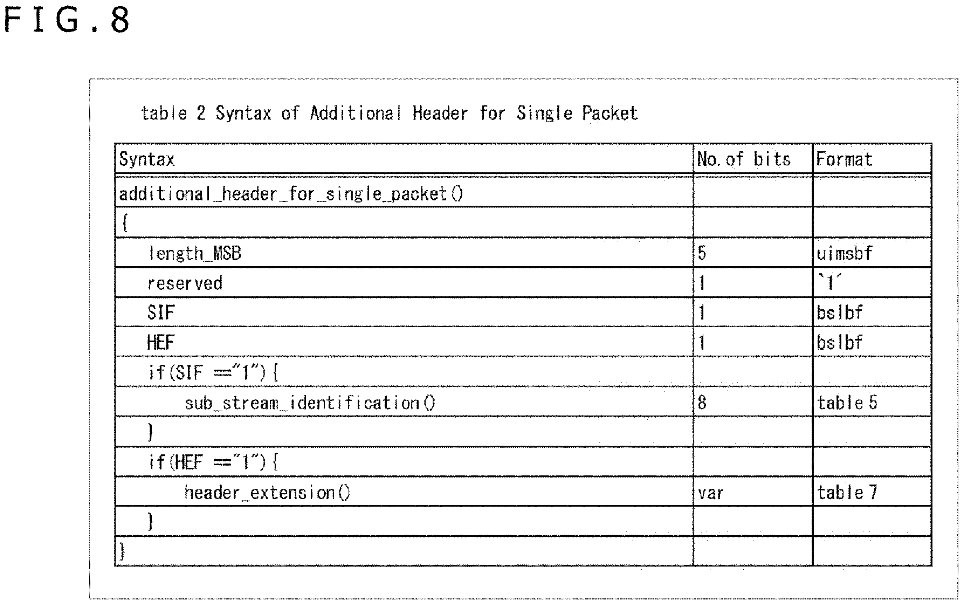

In the case where "1" is specified as header_mode, additional_header_for_single_packet() is provided in the ALP header as an additional header. The detailed structure of this additional_header_for_single_packet() will be described later with reference to FIG. 8.

In the case where "1" is specified as payload_configuration, segmentation_concatenation and length are provided in the ALP header. "0" or "1" is set in the 1-bit segmentation_concatenation in accordance with the type of additional header. The 11-bit length indicates the packet length of the ALP packet (ALP packet length).

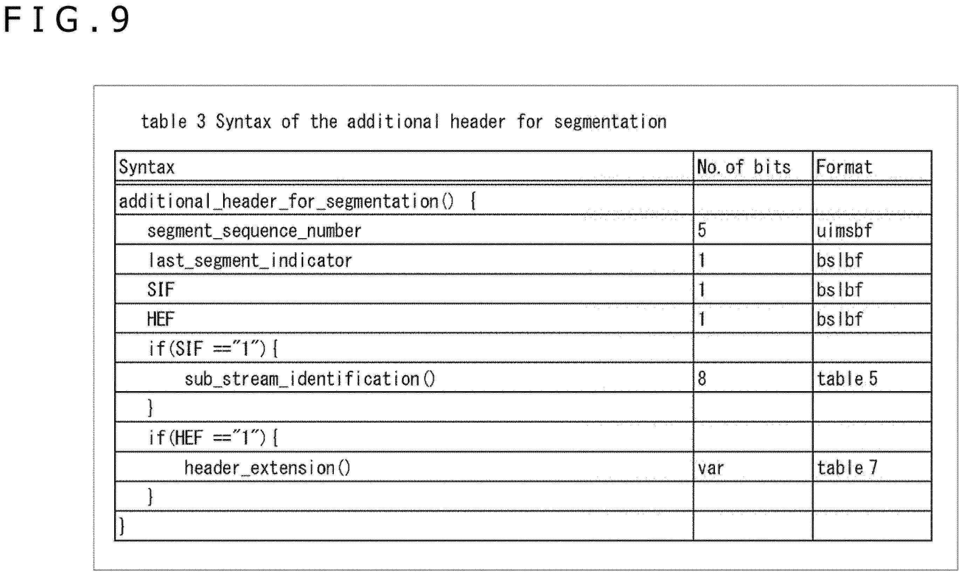

In the case where "0" is specified as segmentation_concatenation, additional_header_for_segmentation() is provided in the ALP header as an additional header. The detailed structure of this additional_header_for_segmentation() will be described later with reference to FIG. 9.

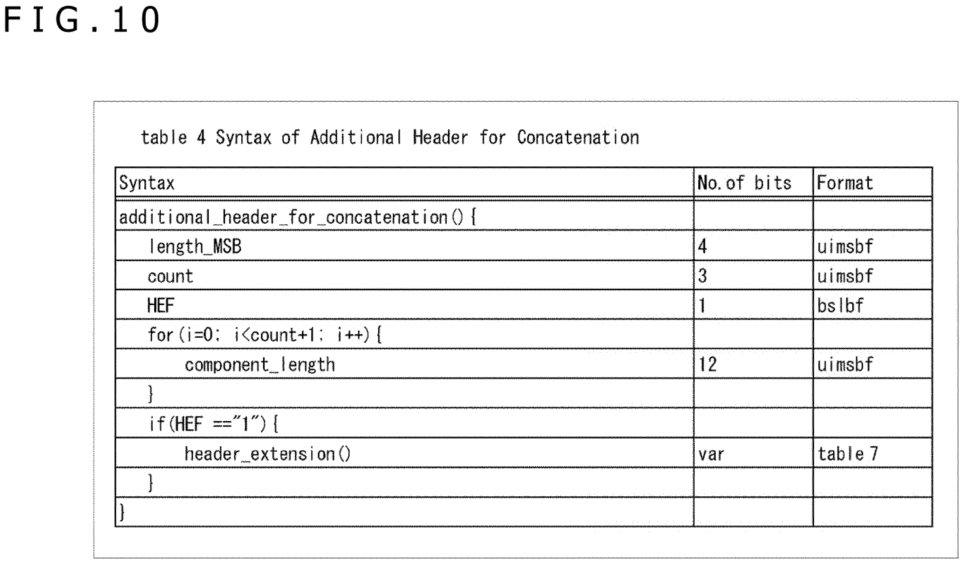

In the case where "1" is specified as segmentation_concatenation, additional_header_for_concatenation() is provided in the ALP header as an additional header. It should be noted that the detailed structure of this additional_header_for_concatenation() will be described later with reference to FIG. 10.

It should be noted that in the case where uimsbf (unsigned integer most significant bit first) is specified as a format (Format), this means that the value is treated as an integer through bitwise operation. Also, in the case where bslbf (bit string, left bit first) is specified, this means that the value is treated as a bit string.

### (Structure of additional_header_for_single_packet)

FIG. 8 is a diagram illustrating an example of syntax of additional_header_for_single_packet() illustrated in FIG. 7.

The 5-bit length_MSB indicates the packet length of the most significant bit (MSB). The 1-bit SIF indicates a flag as to whether a substream ID (sub_stream_identification) exists. In the case where a substream ID exists, SIF = "1."

The 1-bit HEF indicates a flag as to whether an extension header (header_extension) exists. In the case where an extension header exists, HEF = "1."

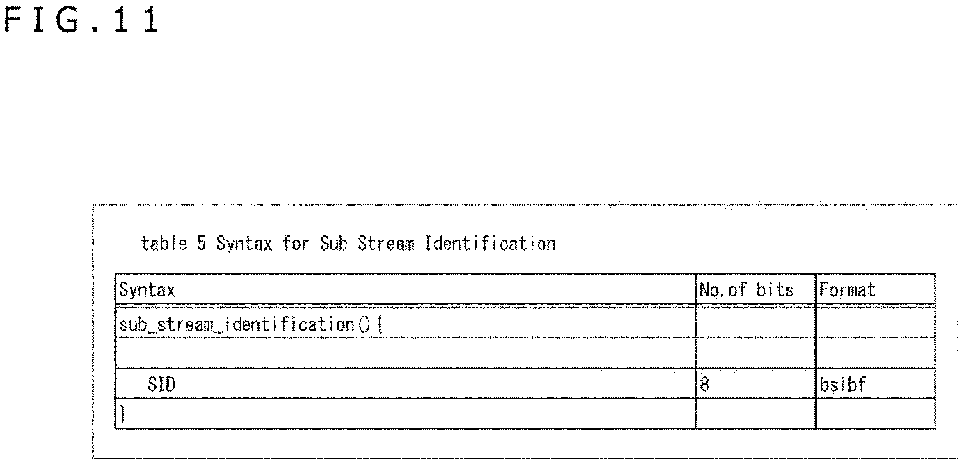

In the case where "1" is specified as SIF, sub_stream_identification() is provided in the ALP header. The detailed structure of this sub_stream_identification() will be described later with reference to FIG. 11.

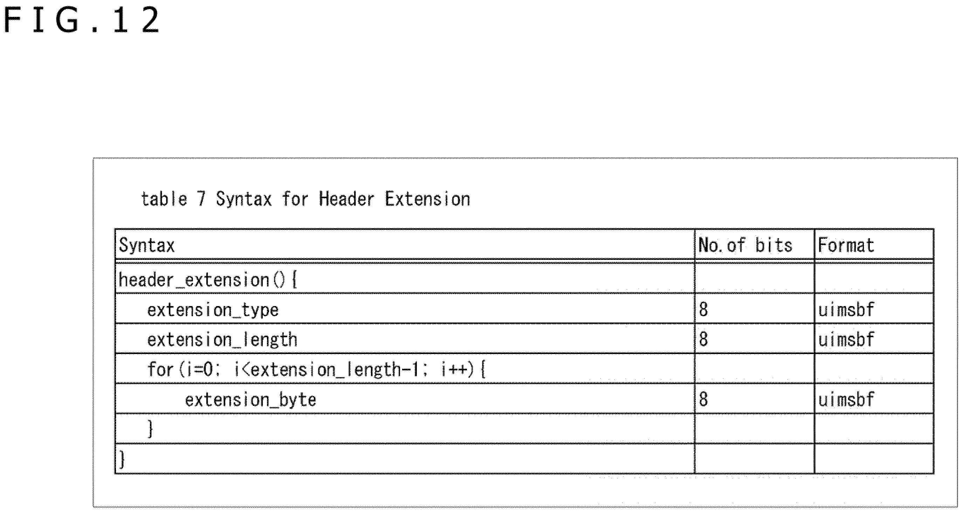

In the case where "1" is specified as HEF, header_extension() is provided in the ALP header as an extension header. The detailed structure of this header_extension() will be described later with reference to FIG. 12.

### (Structure of additional_header_for_segmentation)

FIG. 9 is a diagram illustrating an example of syntax of additional_header_for_segmentation() illustrated in FIG. 7.

The 5-bit segment_sequence_number indicates the segment sequence number. The 1-bit last_segment_indicator indicates the indicator of the last segment.

SIF indicates a flag as to whether a substream ID exists. In the case where "1" is specified as SIF, sub_stream_identification() is provided in the ALP header. Also, HEF indicates a flag as to whether an extension header exists. In the case where "1" is specified as HEF, header_extension() is provided in the ALP header. It should be noted that the detailed structures of sub_stream_identification() and header_extension() will be described later with reference to FIGS. 11 and 12.

### (Structure of additional_header_for_concatenation)

FIG. 10 is a diagram illustrating an example of syntax of additional_header_for_concatenation() illustrated in FIG. 7.

The 5-bit length_MSB indicates the packet length of the most significant bit (MSB). The 3-bit count indicates the count value. The 12-bit component_length is provided in accordance with this count value. The component_length indicates the component length.

The 1-bit HEF indicates a flag as to whether an extension header exists. In the case where "1" is specified as HEF, header_extension() is provided in the ALP header. It should be noted that the detailed structure of header_extension() will be described later with reference to FIG. 12.

### (Structure of sub_stream_identification)

FIG. 11 is a diagram illustrating an example of syntax of sub_stream_identification() illustrated in FIGS. 8 and 9.

The 8-bit SID indicates the substream ID.

### (Structure of header_extension)

FIG. 12 is a diagram illustrating an example of syntax of header_extension() illustrated in FIGS. 8 to 10.

The 8-bit extension_type indicates the extension type. The 8-bit extension_length indicates the extension data length. The 8-bit extension_byte is provided in the extension loop corresponding to the extension data length. As this extension_byte, the extension type data specified by the extension_type is provided in accordance with the extension data length specified by extension_length.

It should be noted that, in the description given below, the "extension type" specified by extension_type of the extension header (header_extension) of the ALP header will be referred to as an "extension data type" for reasons of convenience to differentiate it from the extension type (EXT_TYPE) of the optional field (Optional Field) of the BB header illustrated in FIG. 5.

Thus, the ALP header structure has been described.

### (Problem with Current Packet Processing)

As described above, in the reception apparatus 20 (BB depacketizer 214 thereof), one or a plurality of ALP packets provided in the payload of a BB packet are read from the BB packet by using the leading ALP pointer of the BB header and the ALP header packet length (packet length of the ALP packet).

On the other hand, in the case of an error that cannot be corrected by error correction using LDPC or BCH during the LDPC decoding by the LDPC decoder 211 or during the BCH decoding process by the BCH decoder 212 at the preceding stage thereof, the BB depacketizer 214 is notified of error correction information for notification to that effect.

The BB depacketizer 214 can recognize the occurrence of an error uncorrectable by LDPC or BCH thanks to this error correction information. However, because only information as to the presence or absence of an error is notified, the BB depacketizer 214 cannot recognize at which position of the data the error occurred.

For this reason, for example, in the case where data whose error cannot be corrected by LDPC or BCH exists, all the ALP packets provided in the payload of the BB packet in question are discarded (all the ALP packets included in the FEC block are discarded) in the current ATSC 3.0. If all the ALP packets are thus discarded, the ALP packets including error-free data are also discarded as a result.

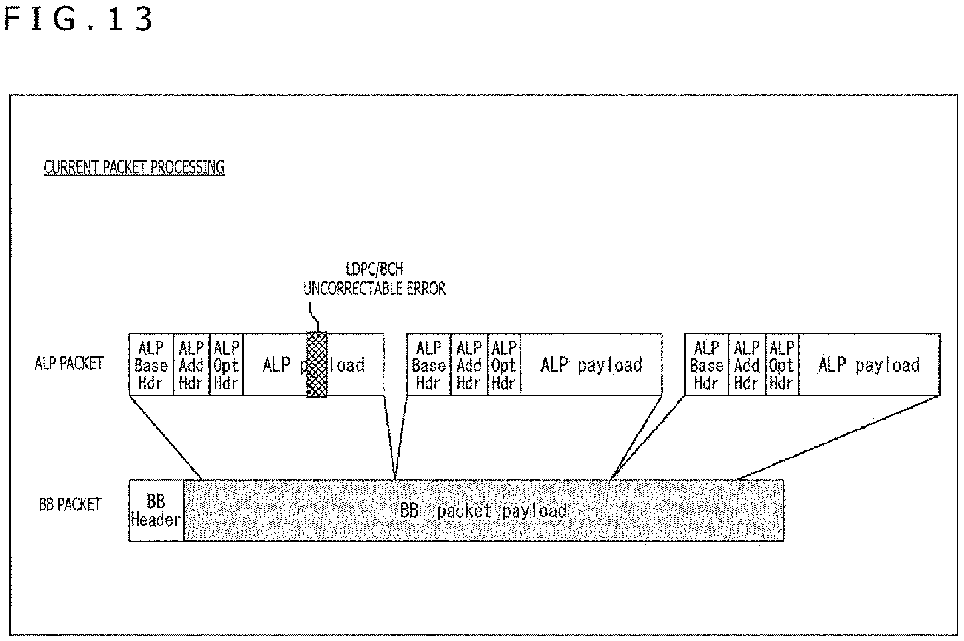

FIG. 13 is a diagram describing current packet processing.

In the current packet processing illustrated in FIG. 13, of the plurality of ALP packets provided in the payload of the BB packet, an uncorrectable error by LDPC or BCH has occurred in the payload of the leading ALP packet. Although the BB depacketizer 214 can recognize the presence of an error that cannot be corrected by LDPC or BCH thanks to error correction information, it cannot identify the position where the error has occurred. Therefore, the BB depacketizer 214 discards not only the leading ALP packet where the error has occurred but also all the ALP packets provided in the BB packet payload.

For this reason, despite the fact that an error has occurred only in the leading ALP packet (payload thereof) provided in the BB packet payload, it becomes impossible to extract not only the leading ALP packet where an error has occurred but also all the ALP packets in the BB packet payload (including those error-free ALP packets).

### (Current Packet Processing)

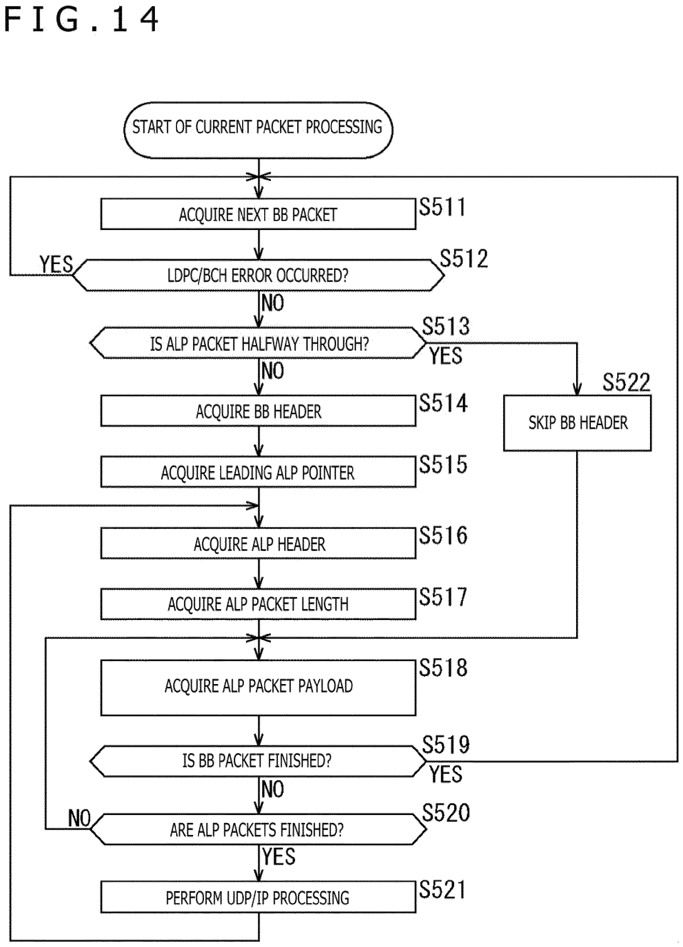

A description will be given here of the flow of current packet processing with reference to the flowchart illustrated in FIG. 14. It should be noted that this current packet processing is carried out by the BB depacketizer 214 through the UDP/IP depacketizer 216 (FIG. 3) of the reception apparatus 20 (FIG. 1) and so on.

In step S511, the BB depacketizer 214 acquires the next BB packet to be processed. In step S512, the BB depacketizer 214 determines, on the basis of error correction information from the LDPC decoder 211 or the BCH decoder 212, whether an error uncorrectable by the LDPC decoder 211 or the BCH decoder 212 (LDPC/BCH error) has occurred in the BB packet (plurality of ALP packets provided in the payload thereof) acquired in the process in step S511.

In step S512, in the case where it is determined that an LDPC/BCH error has occurred in the BB packet to be processed, the process returns to step S511, and the next BB packet to be processed is acquired (S511).

That is, in the case where an error uncorrectable by the LDPC decoder 211 or the BCH decoder 212 occurs, the BB depacketizer 214 discards all the ALP packets provided in the payload of the BB packet where an LDPC/BCH error has occurred and acquires the next BB packet to be processed.

The reason for this is as follows: In the case where a parity error occurs in the LDPC decoder 211 or the BCH decoder 212 at the preceding stage of the BB depacketizer 214, the FEC block thereof is destroyed. However, it is not clear from error correction information where the destruction has occurred. The header including length information may be damaged, and the variable length chain is interrupted. As a result, the FEC block in question is discarded.

On the other hand, in the case where no LDPC/BCH error has occurred in the BB packet to be processed in step S512, the process proceeds to step S513. In step S513, the BB depacketizer 214 determines whether the ALP packets provided in the payload of the BB packet to be processed are halfway through.

In the case where it is determined in step S513 that the ALP packets are not halfway through, the process proceeds to step S514. In step S514, the BB depacketizer 214 acquires the BB header of the BB packet to be processed. Also, in step S515, the BB depacketizer 214 acquires the leading ALP pointer included in the BB header acquired in the process in step S514.

In step S516, the BB depacketizer 214 acquires the ALP header of the ALP packet to be processed (leading ALP packet) on the basis of the position identified by the leading ALP pointer acquired in the process in step S515. Also, in step S517, the BB depacketizer 214 acquires the ALP packet length (packet length of the ALP packet) included in the ALP header acquired in the process in step S516.

In step S518, the BB depacketizer 214 acquires the payload of the ALP packet to be processed. When the payload of the ALP packet is acquired in the process in step S518, the process proceeds to step S519.

In step S519, it is determined whether the BB packet to be processed is finished. In step S519, in the case where it is determined that the BB packet to be processed is yet to be finished, the process proceeds to step S520.

In step S520, it is determined whether the ALP packets to be processed are finished. In the case where it is determined in step S520 that the ALP packets to be processed are finished, the process returns to step S518, and the subsequent processes will be repeated. That is, the payload of the ALP packet to be processed is acquired (S518) until the BB packet to be processed is finished ("YES" in S519) or until the ALP packets to be processed are finished ("YES" in S520).

In the case where it is determined in step S520 that the ALP packets to be processed are finished, the process proceeds to step S521. In step S521, a UDP/IP process is carried out. In this UDP/IP process, for example, the ALP packet extracted from the BB packet (payload thereof) by the ALP depacketizer 215 or the UDP/IP packet extracted from the ALP packet (payload thereof) by the UDP/IP depacketizer 216 is processed.

When the process in step S521 ends, the process proceeds to step S516. Then, the BB depacketizer 214 or other section acquires the next ALP packet (ALP header or payload thereof) to be processed in accordance with the position identified by the ALP packet length (packet length of the ALP packet) acquired in the process in step S517 and performs processes similar to the above processes performed on the ALP packet to be processed (processes from S516 onward).

Also, in the case where it is determined in step S519 that the BB packet to be processed is finished, the process proceeds to step S511. Then, the next BB packet to be processed is acquired, and processes similar to the above processes performed on the BB packet to be processed (processes from S511 onward) are performed.

It should be noted that in the case where it is determined in step S513 that the ALP packets are halfway through, the process proceeds to step S522. In step S522, the BB depacketizer 214 skips the BB header of the BB packet to be processed. When the process in step S522 ends, the process proceeds to step S518, and the subsequent processes will be performed.

Thus, in the current packet processing, in the case where it is determined on the basis of error correction information from the LDPC decoder 211 or the BCH decoder 212 that an LDPC/BCH error has occurred ("YES" in S512), all the ALP packets provided in the payload of the BB packet to be processed are discarded, and the next BB packet to be processed is acquired (S511). That is, if an error uncorrectable by LDPC or BCH occurs in a specific ALP packet, it becomes impossible to extract not only the ALP packet where the error in question has occurred but also all the ALP packets provided in the BB packet to be processed (all the ALP packets are discarded).

At this time, the error-free ALP packets are also discarded. Therefore, proposals have been requested to prevent useless discard of ALP packets provided in a BB packet to be processed even in the event of occurrence of an uncorrectable error in an ALP packet in the BB packet.

For this reason, in the present technology, it is possible to prevent useless discard of ALP packets in a target BB packet even in the event of occurrence of an error uncorrectable by LDPC or BCH in an ALP packet inside a BB packet by providing an error detection code in the BB header of the BB packet or the ALP header of an ALP packet and detecting the position where the error has occurred. A description will be given an embodiment of the present technology hereinafter.

### <3. Embodiment of the Present Technology>

In an embodiment of the present technology, a description will be given of first and second schemes as error detection code transport schemes in a packet, the first scheme in which an error detection code is provided in an ALP header of an ALP packet and the second scheme in which an error detection code is provided in a BB header of a BB packet.

### (1) First Scheme: Providing Error Detection Code in ALP Header

### (ALP Packet Syntax)

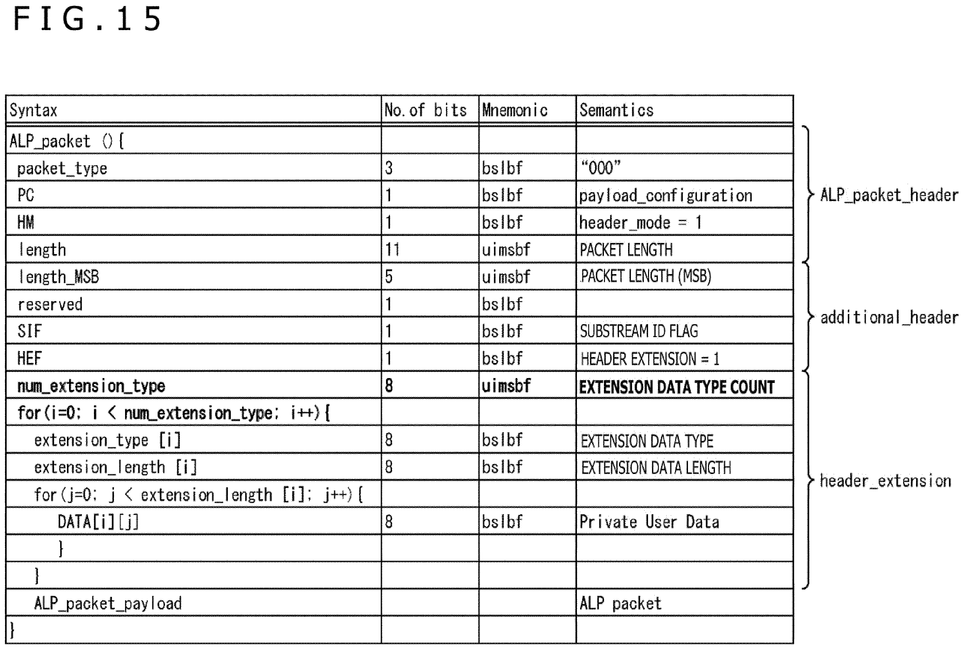

FIG. 15 is a diagram illustrating an example of syntax of an ALP packet. It should be noted that the ALP header structure described below is that obtained by extending the ALP header structure illustrated in FIGS. 7 to 12 described above.

In FIG. 15, the ALP packet includes an ALP header and a payload. Also, the ALP header includes an ALP packet header (ALP_packet_header), an additional header (additional_header), and an extension header (header_extension).

The ALP packet header has packet_type, PC (payload_configuration), HM (header_mode), and length. It should be noted, however, that HW (header_mode) and length are provided in the ALP header by specifying "0" as the 1-bit payload_configuration as described above.

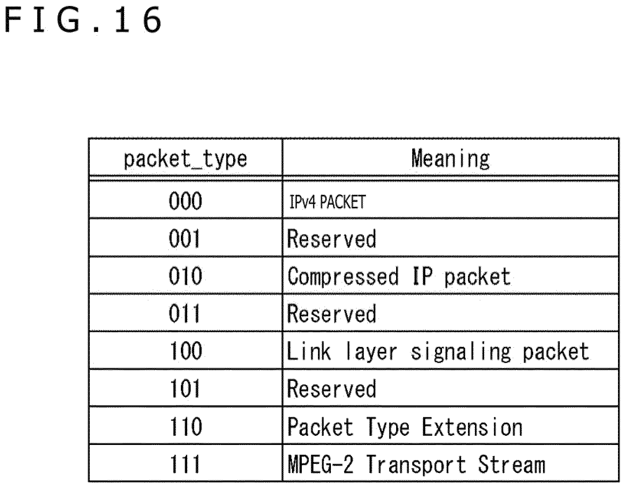

The 3-bit packet_type indicates the packet type of the ALP packet. "000" is always specified as this packet type. FIG. 16 illustrates examples of packet type. For example, in the case where "000" is specified as packet type, the packet in question is an IPv4 (Internet Protocol version 4) packet.

Referring back to the description of FIG. 15, the 1-bit HM (header_mode) indicates the header mode. "1" is always specified as this header mode. As described above, an additional header (additional_header) is provided in the ALP header by specifying "1" as header_mode. The 11-bit length indicates the packet length of the ALP packet (ALP packet length).

The additional header has length_MSB, SIF (SubStream Identification Flag), and HEF (Header Extension Flag).

The 5-bit length_MSB indicates the MSB (Most Significant Bit) packet length. The 1-bit SIF indicates a flag as to whether a substream ID (sub_stream_identification) exists. In the case where a substream ID exists, SIF = "1."

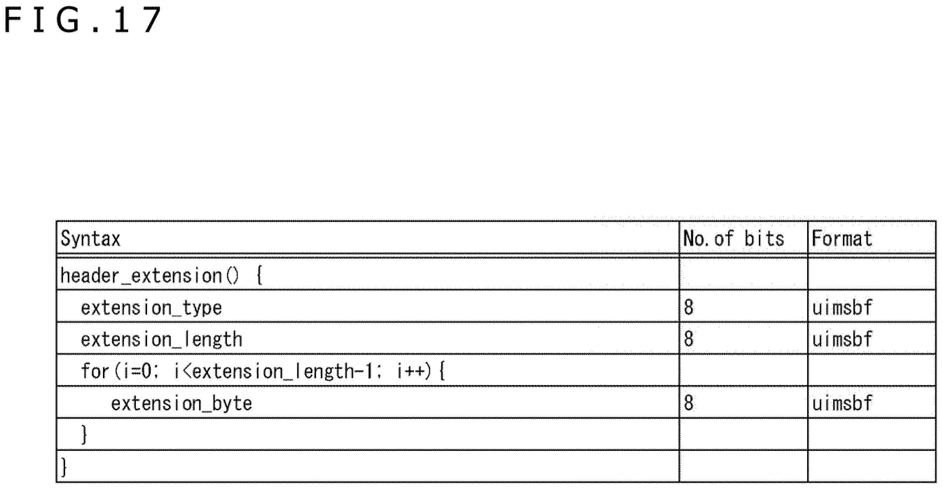

The 1-bit HEF indicates a flag as to whether an extension header (header_extension) exists. In the case where an extension header exists, HEF = "1." In the present technology, in the case where an error detection code is provided in the ALP header of an ALP packet, the error detection code is provided in this extension header. Therefore, the header is extended by setting HEF = "1." In this extension header, as illustrated in FIG. 17, extension data type data specified by extension_type can be provided in accordance with the extension data length specified by extension_length.

Referring back to the description of FIG. 15, data (DATA[i][j]) corresponding to the extension data length (extension_length[i]) can be provided for each of one or a plurality of extension data types (extension_type[i]) by extending the 8-bit num_extension_type in the extension header (header_extension) illustrated in FIG. 15 and making it possible to specify the number of extension data types.

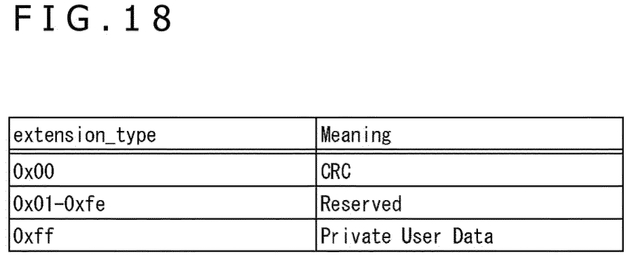

Here, FIG. 18 illustrates examples of extension data types. In FIG. 18, in the case where "0x00" is specified as an extension data type (extension_type), this indicates that CRC (Cyclic Redundancy Check) is provided in the data (DATA) in the loop corresponding to the extension data length (extension_length).

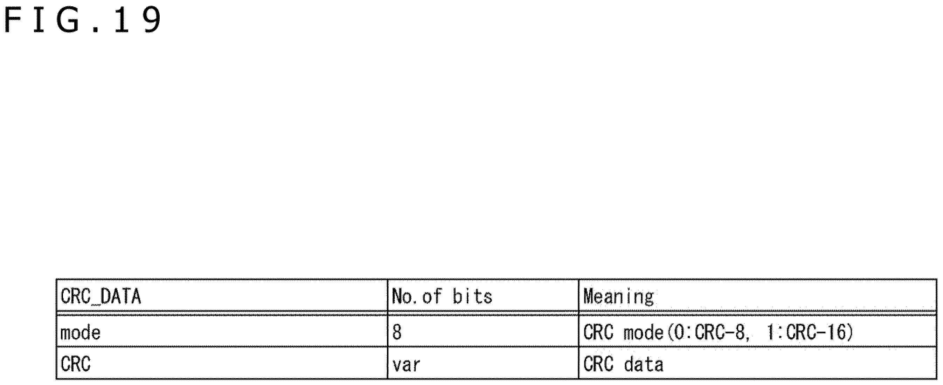

Also, in the case where an extension data type illustrated in FIG. 18 is used, the CRC_DATA data structure illustrated in FIG. 19, for example, can be provided as data (DATA) in the loop corresponding to the extension data length illustrated in FIG. 15. In FIG. 19, mode and CRC are provided in CRC_DATA.

The 8-bit mode indicates the CRC mode (hereinafter referred to as a CRC mode). For example, when "0," the CRC mode indicates CRC-8. Also, for example, when "1," the CRC mode indicates CRC-16. CRC data corresponding to the CRC mode specified by mode is provided in CRC.

Although various types of CRC-8 and CRC-16 exist depending on the difference in polynomial, CRC-8-CCITT (X⁸ + X⁷ + X³ + X² + 1) and CRC-16-CCITT (X¹⁶ + X¹² + X⁵ + 1), prescribed by CCITT (Comite Consultatif International Telegraphique et Telephonique), for example, can be used here.

It should be noted, however, that not only CRC-8s other than CRC-8-CCITT and CRC-16s other than CRC-16-CCITT but also other CRCs such as CRC-32 and CRC-64, for example, may be used. Also, CRCs are merely examples of error detection codes, and other error detection codes may be used.

It should be noted that in the case where "Oxff" is specified as an extension data type illustrated in FIG. 18, this indicates that private user data (Private User Data) is provided in the data (DATA) in the loop corresponding to the extension data length. Arbitrary data such as data desired to be notified between devices can be provided as this private user data, for example. Also, extension data types "0x01" to "Oxfe" in FIG. 18 are areas for future extension (Reserved).

Also, although only CRC is specified in the extension data type illustrated in FIG. 18, and a CRC mode such as CRC-8 or CRC-16 is specified by CRC_DATA illustrated in FIG. 19, the CRC corresponding to the CRC mode may be specified by the extension data type.

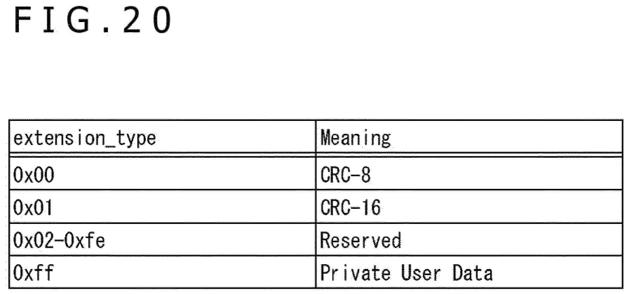

FIG. 20 illustrates examples of extension data types that permit specification of a CRC corresponding to a CRC mode. In FIG. 20, in the case where "0x00" is specified as an extension data type (extension_type), this indicates that CRC-8 data is provided in the data (DATA) in the loop corresponding to the extension data length (extension_length) illustrated in FIG. 15. Also, in the case where "0x01" is specified as an extension data type, this indicates that CRC-16 data is provided in the data (DATA) in the loop corresponding to the extension data length illustrated in FIG. 15.

Thus, in the case where the first scheme is adopted, an error detection code (e.g., CRC-8 or CRC-16) is provided in the ALP header (extension header) of the ALP packet. This makes it possible for the reception apparatus 20 (BB depacketizer 214 thereof) to perform an error detection process using the error detection code included in this ALP header and process the ALP packets provided in the BB packet payload in accordance with a detection position thereof (position where an error uncorrectable by LDPC or BCH has occurred).

### (2) Second scheme: Providing Error Detection Code in BB Header

### (Structure of the BB Header)

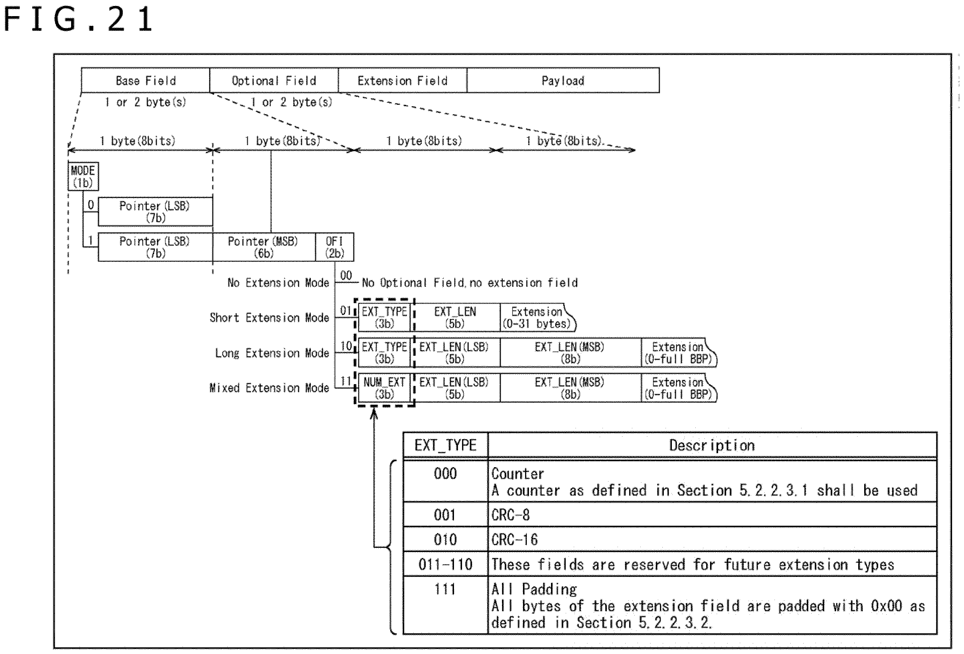

FIG. 21 is a diagram illustrating an example of a data structure in the case where CRC is provided in the BB header of the BB packet. It should be noted that the BB header structure illustrated in FIG. 21 corresponds to the BB header structure illustrated in FIG. 5 described above and that the description will be omitted as appropriate for those portions where the description is repeated.

In FIG. 21, the BB packet includes a BB header and a payload (Payload). Not only a base field (Base Field) but also an optional field (Optional Field) and an extension field (Extension Field) can be provided in the BB header.

The 2-bit optional flag (OPTI: OPTIONAL) is provided in the base field. In the case where "01," "10," or "11" is set as this optional flag, optional and extension fields are extended. In the case where this extension takes place, the 3-bit extension type (EXT_TYPE) is set at the beginning of the optional field.

An extension field type is specified as this extension type. For example, in the case where "001" is specified as an extension type, this indicates that CRC-8 data is provided in the extension field. Also, in the case where "010" is specified as an extension type, this indicates that CRC-16 data is provided in the extension field.

Here, CRC-8-CCITT (X⁸ + X⁷ + X³ + X² + 1) and CRC-16-CCITT (X¹⁶ + X¹² + X⁵ + 1), for example, can be used as CRC-8 and CRC-16 as with the first scheme described above. It should be noted, however, that not only CRC-8s other than CRC-8-CCITT and CRC-16s other than CRC-16-CCITT but also other CRCs such as CRC-32 and CRC-64, for example, may be used. Also, CRCs are merely examples of error detection codes, and other error detection codes may be used.

It should be noted that extension types "011" to "110" in the extension type (EXT_TYPE) illustrated in FIG. 21 are areas for future extension. Also, in the case where "000" is specified as an extension type, this means that a counter is provided, and in the case where "111" is specified, this means that the extension type is padded.

Thus, in the case where the second scheme is adopted, an error detection code (e.g., CRC-8 or CRC-16) is provided in the BB header (extension field) of the BB packet. This makes it possible for the reception apparatus 20 (BB depacketizer 214 thereof) to perform an error detection process using the error detection code included in this BB header.

It should be noted that either the first or second scheme may be adopted or both thereof may be adopted at the same time. In the case where both schemes are adopted at the same time, each of an error detection code is provided in the ALP header of an ALP packet and the BB header of the BB packet.

### (3) Packet Processing of the Present Technology

### (Packet Processing of the Present Technology)

A description will be given next of specific details of packet processing in the case where an error detection code is provided in the ALP header of an ALP packet or the BB header of the BB packet by the first or second scheme described above. A description will be given here of an error detection process using an error detection code (e.g., CRC-8 or CRC-16) included in the ALP header of an ALP packet, carried out by the reception apparatus 20 (BB depacketizer 214 thereof) in the case where the first scheme is adopted as an error detection code transport scheme in a packet.

It should be noted, however, that details of processing performed on the ALP packet vary depending on the error detection position (position where an error uncorrectable by LDPC or BCH has occurred) in this error detection process. Therefore, a description will be individually given of a case in which the error detection position is an ALP packet payload and a case in which the error detection position is an ALP header of an ALP packet.

### (A) Case 1: Case in Which the Error Detection Position Is a Payload

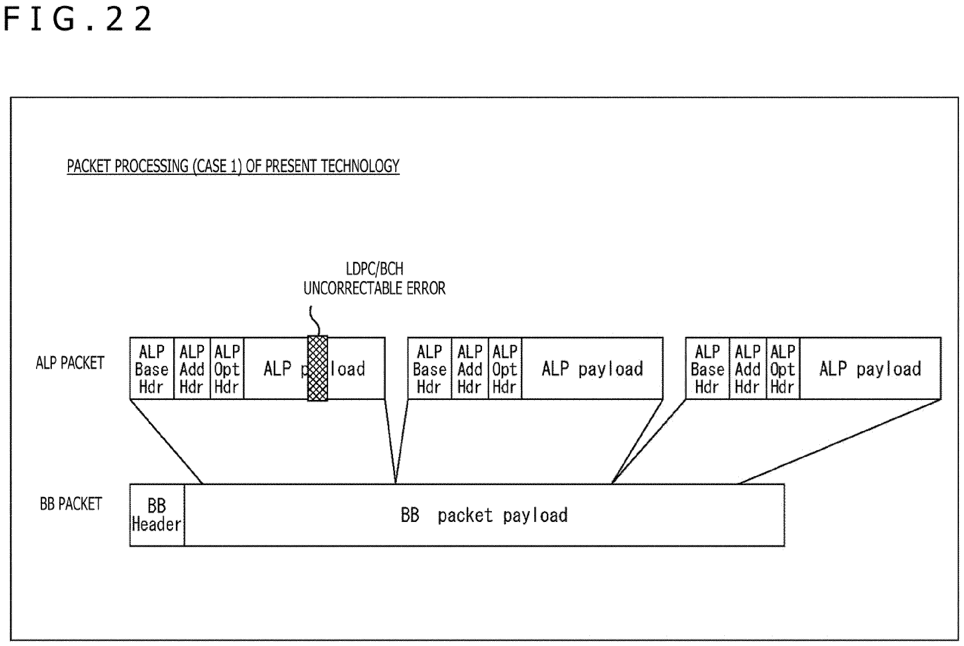

FIG. 22 is a diagram describing packet processing of the present technology in the case where the error detection position is an ALP packet payload.

In the packet processing of the present technology illustrated in FIG. 22, of the plurality of ALP packets provided in the payload of the BB packet to be processed, the occurrence of an error uncorrectable by LDPC or BCH is detected in the payload of the leading ALP packet by the error detection process using an error detection code (e.g., CRC-8 or CRC-16) included in the ALP header of an ALP packet.

In the packet processing of the present technology illustrated in FIG. 22, even in the case where the occurrence of an error is detected (recognized) in the payload of the leading ALP packet whose position is identified by the leading ALP pointer of the BB header of the BB packet to be processed, the ALP header of the ALP packet in question has no error. Therefore, it is possible to extract the ALP packets subsequent to the leading ALP packet where the error was detected in accordance with the packet length of the ALP header (packet length of the ALP packet).

That is, the error detection process using an error detection code in the ALP header permits not only recognition of the occurrence of an error uncorrectable by LDPC or BCH but also detection of the position where the error has occurred. This ensures that error-free ALP packets are not discarded by identifying the ALP packet (payload thereof) where the error has occurred and keeping the variable length chain of the ALP packets uninterrupted in the payload of the BB packet to be processed.

In other words, even in the case where an error uncorrectable by LDPC or BCH occurs in the payload of the ALP packet provided in the BB packet payload, if the ALP header (error detection code thereof) of the ALP packet has no error, it is possible to continue to extract the ALP packets in the payload of the BB packet to be processed.

As a result, the packet processing of the present technology illustrated in FIG. 22 does not resort to a process such as discarding not only the ALP packet where an error uncorrectable by LDPC or BCH has occurred but also all the ALP packets provided in the BB packet payload as done with the current packet processing described above (FIG. 13), thereby preventing useless discard of ALP packets.

### (B) Case 2: Case in Which the Error Detection Position Is an ALP Header

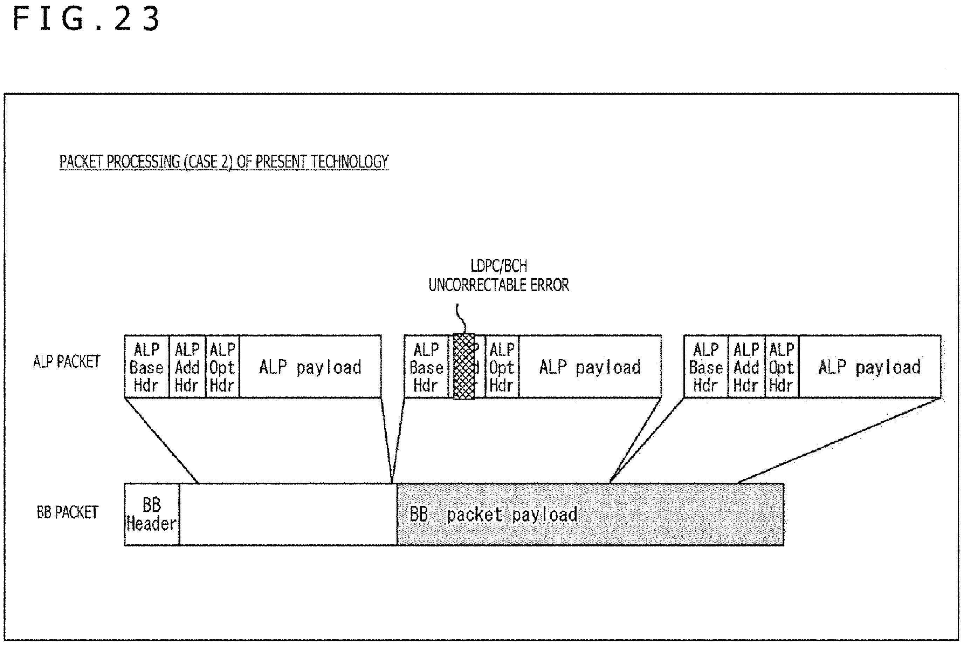

FIG. 23 is a diagram describing packet processing of the present technology in the case where the error detection position is an ALP header of an ALP packet.

In the packet processing of the present technology illustrated in FIG. 23, of the plurality of ALP packets provided in the payload of the BB packet to be processed, the occurrence of an error uncorrectable by LDPC or BCH is detected in the ALP header of the second ALP packet by the error detection process using an error detection code (e.g., CRC-8 or CRC-16) included in the ALP header of an ALP packet.

In the packet processing of the present technology illustrated in FIG. 23, the occurrence of an error is detected (recognized) in the ALP header of the second ALP packet. Therefore, information of the ALP header in question is not always correct. Therefore, although the second and subsequent ALP packets are discarded, the previous leading ALP packet is not discarded because it has no error.

That is, the error detection process using an error detection code in the ALP header permits not only recognition of the occurrence of an error uncorrectable by LDPC or BCH but also detection of the position where the error has occurred. Therefore, the ALP packet (ALP header thereof) where the error has occurred is identified, thereby preventing discard of error-free ALP packets to the extent possible.

In other words, even in the case where an error uncorrectable by LDPC or BCH occurs in the ALP header of an ALP packet provided in the BB packet payload, in the payload of the BB packet to be processed, it is possible to continue to extract the ALP packets up to the ALP packet immediately previous to the ALP packet including the ALP header in question.

As a result, although not able to prevent discard of (save) all the ALP packets provided in the payload of the BB packet to be processed, the packet processing of the present technology illustrated in FIG. 23 can prevent discard of some of the ALP packets up to the one immediately previous to the ALP packet including the ALP header where an error has occurred (can save a measurable number of ALP packets).

That is, although some of the ALP packets are discarded, the packet processing of the present technology illustrated in FIG. 23 does not resort to a process such as discarding not only the ALP packet where an error has occurred but also all the ALP packets provided in the BB packet payload as done with the current packet processing described above (FIG. 13), thereby preventing useless discard of ALP packets.

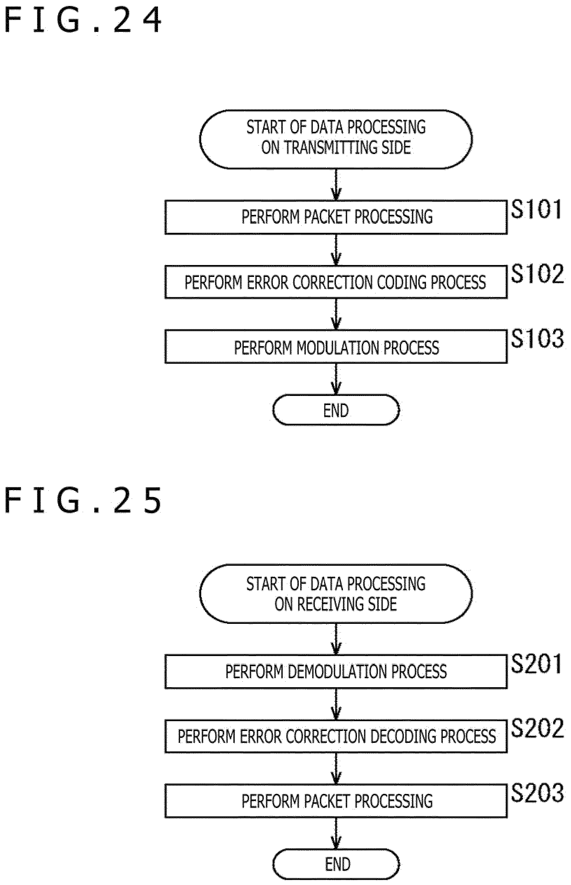

A description will be given next of details of the processes performed by the transmission apparatus 10 and the reception apparatus 20 included in the transport system 1 illustrated in FIG. 1 with reference to the flowcharts illustrated in FIGS. 24 to 26.

### (Data Processing on the Transmitting Side)

A description will be given first of the data processing flow on the transmitting side performed by the transmission apparatus 10 (FIG. 1) with reference to the flowchart illustrated in FIG. 24.

In step S101, packet processing is performed on content data such as broadcast program. In this packet processing, processes of generating UDP/IP packets, ALP packets, and a BB packet are performed by the UDP/IP packetizer 103, the ALP packetizer 104, and the BB packetizer 105.

It should be noted, however, that in the case where the first scheme is adopted as an error detection code transport scheme in a packet, an error detection code such as CRC-8 or CRC-16, for example, is provided in the ALP header of an ALP packet generated in the process in step S101. Here, for example, an error detection code (DATA) corresponding to the extension data type (extension_type) is provided in the extension header (header_extension) of the ALP header as illustrated in FIG. 15.

Also, in the case where the second scheme is adopted as an error detection code transport scheme in a packet, an error detection code such as CRC-8 or CRC-16, for example, is provided in the BB header of the BB packet generated in the process in step S101. Here, for example, an error detection code (e.g., CRC-8 or CRC-16) corresponding to the extension type (EXT_TYPE) is provided in the extension header (Extension Field) of the BB header as illustrated in FIG. 21.

In step S102, an error correction coding process is performed on the data acquired by the process in step S101. In this error correction coding process, processes such as BCH coding by the BCH encoder 107 and LDPC coding by the LDPC encoder 108 are performed.

In step S103, the data subjected to the error correction coding process in the process in step S102 is subjected to a modulation process. In this modulation process, processes such as interleaving processes by various interleavers and those by the data mapper 111 and the OFDM transmission section 117 are performed. Then, the RF signal (OFDM signal) acquired by this modulation process is sent via the transport path 30.

Thus, the data processing flow on the transmitting side has been described.

### (Data Processing on the Receiving Side)

A description will be given next of the data processing flow on the receiving side performed by the reception apparatus 20 (FIG. 1) with reference to the flowchart illustrated in FIG. 25.

In step S201, the RF signal (OFDM signal) sent from the transmission apparatus 10 via the transport path 30 is subjected to a demodulation process. In this demodulation process, processes by the OFDM reception section 202 and the data demapper 208 and deinterleaving processes by various deinterleavers are performed.

In step S202, an error correction decoding process is performed on the data demodulated in the process in step S201. In this error correction decoding process, processes such as LDPC decoding by the LDPC decoder 211 and BCH decoding by the BCH decoder 212 are performed.

In step S203, packet processing is performed on the data that was subjected to the error correction decoding process in the process in step S202. In this packet processing, packet processing is performed on the BB packet, the ALP packets, and the UDP/IP packets by the BB depacketizer 214, the ALP depacketizer 215, and the UDP/IP depacketizer 216.

It should be noted, however, that in the case where the first scheme is adopted as an error detection code transport scheme in a packet, an error detection code (e.g., CRC-8 or CRC-16) corresponding to the extension data type (extension_type) is provided in the ALP header (extension header (header_extension) thereof) of the ALP packet processed in the process in step S203. Therefore, an error detection process is performed using this error detection code in the ALP header.

Also, in the case where the second scheme is adopted as an error detection code transport scheme in a packet, an error detection code (e.g., CRC-8 or CRC-16) corresponding to the extension type (EXT_TYPE) is provided in the BB header (extension field (Extension Field) thereof) of the BB packet processed in the process in step S203. Therefore, an error detection process is performed using this error detection code in the BB header.

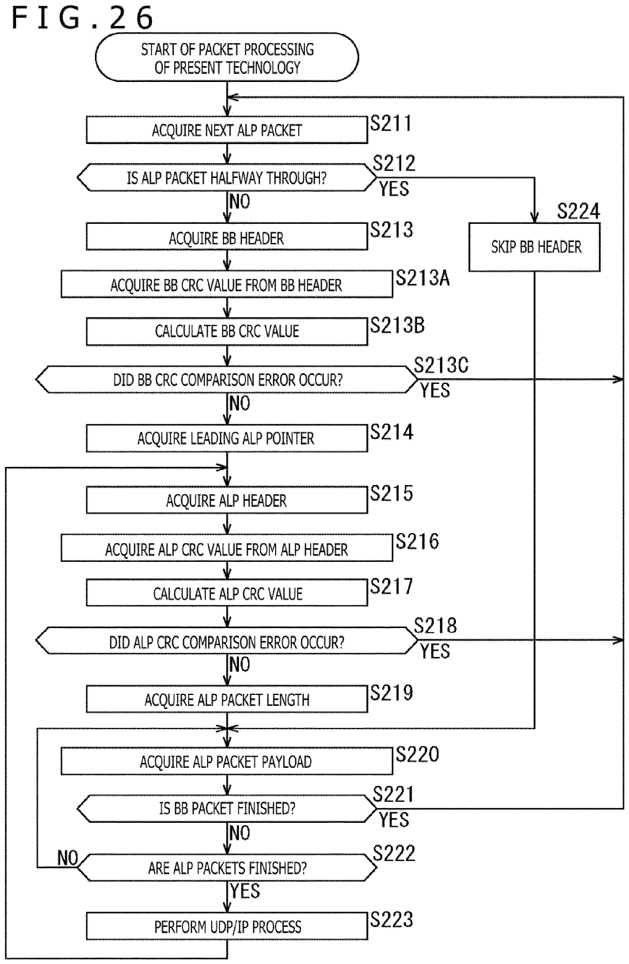

It should be noted that details of this packet processing will be described later with reference to the flowchart in FIG. 26. Also, content such as broadcast programs is reproduced in the reception apparatus 20 by decoding the packet-processed data with the AV decoder 218 and so on.

Thus, the data processing flow on the receiving side has been described.

### (Packet Processing of the Present Technology)

Finally, a description will be given of the packet processing flow of the present technology corresponding to the process in step S203 illustrated in FIG. 25 with reference to the flowchart illustrated in FIG. 26. It should be noted that the packet processing of the present technology is carried out by the BB depacketizer 214 through the UDP/IP depacketizer 216 (FIG. 3) of the reception apparatus 20 (FIG. 1) and so on.

In step S211, the BB depacketizer 214 acquires the next BB packet to be processed. In step S212, the BB depacketizer 214 determines whether the ALP packets provided in the payload of the BB packet to be processed acquired in the process in step S211 are halfway through.

In the case where it is determined in step S212 that the ALP packets are not halfway through, the process proceeds to step S213. In step S213, the BB depacketizer 214 acquires the BB header of the BB packet to be processed.

In step S213A, the BB depacketizer 214 acquires the CRC value (BB CRC value) included in the BB header (extension field thereof) acquired in the process in step S213. Also, in step S213B, the BB depacketizer 214 calculates the CRC value (BB CRC value) on the basis of the CRC value (BB CRC value) acquired in the process in step S213A.

In step S213C, the BB depacketizer 214 determines, in accordance with the calculation result in step S213B, whether a CRC value (BB CRC value) comparison error has occurred. It should be noted that this determining process (S213C) of the comparison error using a BB CRC value will be handled similarly to the comparison error determining process (S218) using an ALP CRC value which will be described later. Therefore, a detailed description will be omitted here.

In the case where it is determined in step S213C that a CRC value (BB CRC value) comparison error has occurred, the process returns to step S211. Then, the next BB packet to be processed is acquired, and processes similar to the above processes performed on the BB packet to be processed (processes from S211 onward) are performed.

On the other hand, in the case where it is determined in step S213C that no CRC value (BB CRC value) comparison error has occurred, the process proceeds to step S214. In step S214, the BB depacketizer 214 acquires the leading ALP pointer included in the BB header acquired in the process in step S213.

In step S215, the BB depacketizer 214 acquires the ALP header of the ALP packet to be processed (leading ALP packet) on the basis of the position identified by the leading ALP pointer acquired in the process in step S214.

In step S216, the BB depacketizer 214 acquires the CRC value (ALP CRC value) included in the ALP header (extension header thereof) acquired in the process in step S215. Also, in step S217, the BB depacketizer 214 calculates the CRC value (ALP CRC value) on the basis of the CRC value (ALP CRC value) acquired in the process in step S216.

In step S218, the BB depacketizer 214 determines, in accordance with the calculation result in step S217, whether a CRC value (ALP CRC value) comparison error has occurred.

Here, for example, in the case where CRC-8 or CRC-16 is used, data is sent from the transmission apparatus 10 via the transport path 30. This data is acquired by performing given calculations on an input data string and adding the remainder thereof as a value for checking purposes. In the reception apparatus 20 (BB depacketizer 214 thereof), therefore, whether the data is corrupted is determined by performing the same calculations (given calculations) using the data from the transmission apparatus 10 and comparing the calculation result against the value for checking purposes.

In the case where it is determined, in step S218, that a CRC value (ALP CRC value) comparison error has occurred, the process returns to step S211. Then, the next BB packet to be processed is acquired, and processes similar to the above processes performed on the BB packet to be processed (processes from S211 onward) are performed.

That is, in this case, an error has been detected in the ALP header of an ALP packet (equivalent to the case in which the error detection position is an ALP header in case 2 in FIG. 23). Therefore, although the ALP packet including the ALP header in question and subsequent ALP packets are discarded, the ALP packets previous to the ALP packet including the ALP header in question are not discarded because they have no error.

On the other hand, in the case where it is determined in step S218 that no CRC value (ALP CRC value) comparison error has occurred, the process proceeds to step S219. In step S219, the BB depacketizer 214 acquires the ALP packet length (packet length of the ALP packet) included in the ALP header acquired in the process in step S215. It should be noted that the ALP packet length acquired here is data acquired from the ALP header from which no error was detected by the CRC error detection process. Therefore, it can be said that the data is reliable.

In step S220, the BB depacketizer 214 acquires the payload of the ALP packet to be processed. When the ALP packet payload is acquired in the process in step S220, the process proceeds to step S211.

In step S221, it is determined whether the BB packet to be processed is finished. In the case where it is determined in step S211 that the BB packet to be processed is not finished, the process proceeds to step S222.

In step S222, it is determined whether the ALP packets to be processed are finished. In the case where it is determined in step S222 that the ALP packets to be processed are not finished, the process returns to step S220, and the subsequent processes will be repeated. That is, the payload of the ALP packet to be processed is acquired (S220) until the BB packet to be processed is finished ("YES" in S221) or until the ALP packets to be processed are finished ("YES" in S222).

In the case where it is determined in step S222 that the ALP packets to be processed are finished, the process proceeds to step S223. In step S223, a UDP/IP process is carried out. In this UDP/IP process, for example, the ALP packet extracted from the BB packet (payload thereof) by the ALP depacketizer 215 or the UDP/IP packet extracted from the ALP packet (payload thereof) by the UDP/IP depacketizer 216 is processed.

When the process in step S223 ends, the process proceeds to step S215. Then, the BB depacketizer 214 or other section acquires the next ALP packet (ALP header or payload thereof) to be processed in accordance with the position identified by the ALP packet length (packet length of the ALP packet) acquired in the process in step S219 and performs processes similar to the above processes performed on the ALP packet to be processed (processes from S215 onward).

Also, in the case where it is determined in step S221 that the BB packet to be processed is finished, the process proceeds to step S211. Then, the next BB packet to be processed is acquired, and processes similar to the above processes performed on the BB packet to be processed (processes from S211 onward) are performed.

It should be noted that in the case where it is determined in step S212 that the ALP packets to be processed are halfway through, the process proceeds to step S224. In step S224, the BB depacketizer 214 skips the BB header of the BB packet to be processed. When the process in step S224 ends, the process proceeds to step S220, and the subsequent processes will be performed.

Thus, the packet processing flow of the present technology has been described. In the packet processing flow of the present technology, in the case where an error is detected in the ALP header of an ALP packet, although some ALP packets are discarded, error-free ALP packets are not discarded, thereby preventing useless discard of ALP packets.

### <4. Modification Example>

Although, in the above description, ATSC (ATSC 3.0 in particular), a scheme adopted, for example, in the United States, was described as a digital broadcasting standard, the present technology may be applied to ISDB (Integrated Services Digital Broadcasting), a scheme adopted, for example, in Japan and DVB (Digital Video Broadcasting), a scheme adopted in European nations, and so on. Also, although a description was given in the above description by citing ATSC 3.0 that adopts the IP transport scheme as an example, the scheme is not limited to an IP transport scheme, and the present technology may be applied to other schemes such as MPEG2-TS (Transport Stream), for example.

Also, the present technology is applicable to digital broadcasting standards including not only terrestrial broadcasting and satellite broadcasting such as broadcasting satellite (BS) and communications satellite (CS) but also wired broadcasting such as cable TV (CATV).

Also, the packet, header, and other names described above are merely examples, and there are cases in which other names may be used. For example, a BB packet (Baseband Packet) may be referred to as a BBS (Baseband Stream) or BBF (Baseband Frame). An ALP (ATSC Link layer Protocol) packet may be referred to as a Generic packet and so on. It should be noted, however, that these differences in name are differences in formality and that there is no difference in substantial content of target packet or header.

Further, the present technology is also applicable to a given standard (standard other than digital broadcasting standard) prescribed on the premise that transport paths other than broadcasting network, i.e., communication lines (communication networks) such as the Internet and telephone network, are used as transport paths. In this case, a communication line such as the Internet or telephone network can be used as the transport path 30 of the transport system 1 (FIG. 1), and a server provided on the Internet can be used as the transmission apparatus 10. Then, the reception apparatus 20 is provided with a communication function. As a result, the transmission apparatus 10 (server) performs processes in response to a request from the reception apparatus 20. On the other hand, the reception apparatus 20 processes data sent from the transmission apparatus 10 (server) via the transport path 30 (communication line).

### <5. Configuration of the Computer>

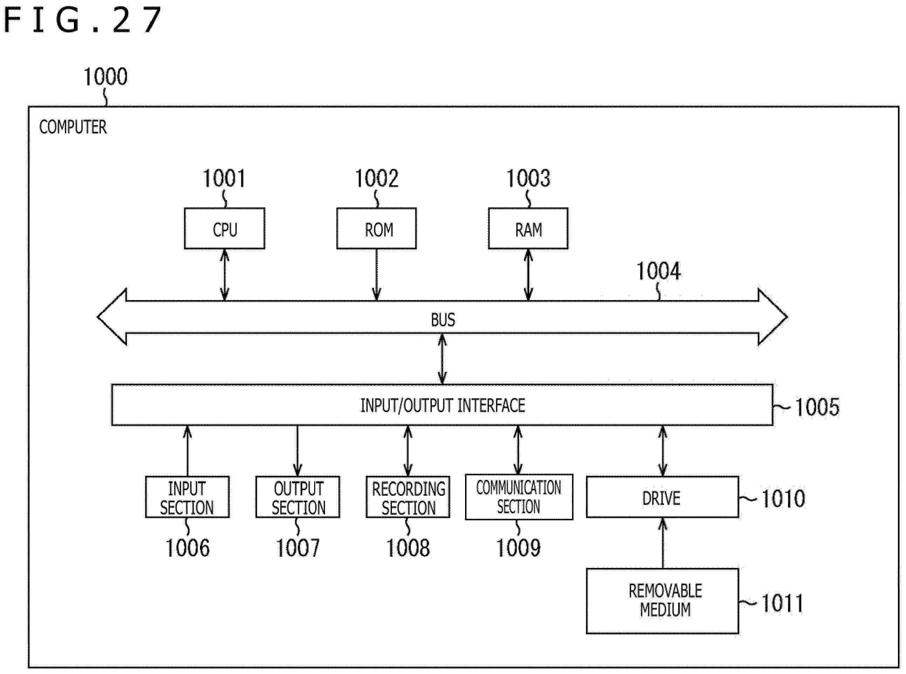

The series of processes described above may be performed by hardware or software. In the case where the series of processes are performed by software, the program included in the software is installed to a computer. FIG. 27 is a diagram illustrating a hardware configuration example of a computer for performing the above series of processes using the program.

In a computer 1000, a CPU (Central Processing Unit) 1001, a ROM (Read Only Memory) 1002, and a RAM (Random Access Memory) 1003 are connected to each other by a bus 1004. An input/output interface 1005 is further connected to the bus 1004. An input section 1006, an output section 1007, a recording section 1008, a communication section 1009, and a drive 1010 are connected to the input/output interface 1005.

The input section 1006 includes a keyboard, a mouse, a microphone, and so on. The output section 1007 includes a display, a speaker, and so on. The recording section 1008 includes a hard disk, a non-volatile memory, and so on. The communication section 1009 includes a network interface and so on. The drive 1010 drives a removable medium 1011 such as magnetic disk, optical disc, magneto-optical disk, or semiconductor memory.

In the computer 1000 thus configured, the CPU 1001 loads the program recorded in the ROM 1002 or the recording section 1008 into the RAM 1003 via the input/output interface 1005 and the bus 1004 for execution, thereby allowing the above series of processes to be performed.

The program executed by the computer 1000 (CPU 1001) can be provided recorded, for example, in the removable medium 1011 as a packaged medium or the like. Alternatively, the program can be provided via a wired or wireless transport medium such as local area network, the Internet, and digital satellite broadcasting.

In the computer 1000, the program can be installed to the recording section 1008 via the input/output interface 1005 by inserting the removable medium 1011 into the drive 1010. Alternatively, the program can be received by the communication section 1009 via a wired or wireless transport medium and installed to the recording section 1008. In addition to the above, the program can be installed, in advance, to the ROM 1002 or the recording section 1008.

Here, in the present specification, the processes performed by the computer in accordance with the program need not necessarily be performed chronologically in accordance with the sequence described as a flowchart. That is, the processes performed by the computer in accordance with the program include those that are performed in parallel or individually (e.g., parallel processes or object-based processes). Also, the program may be processed by a single computer (processor) or by a plurality of computers in a distributed manner.

It should be noted that embodiments of the present technology are not limited to that described above and can be modified in various ways without departing from the gist of the present technology.

It should be noted that the present technology can have the following configurations:
(1) A reception apparatus including:
   a processing section adapted to process a plurality of transport packets provided in a payload of a baseband packet that has gone through demodulation, the transport packets including a header and a payload, the header including an error detection code, the payload having an IP (Internet Protocol) packet provided therein, the IP packet including a UDP (User Datagram Protocol) packet, in which
   the processing section performs an error detection process by using the error detection code included in the transport packet header.
(2) The reception apparatus of feature (1), in which
   in the case where an error is detected by the error detection process using the error detection code included in the transport packet header, the processing section performs a process corresponding to a detection position of the error.
(3) The reception apparatus of feature (2), in which
   in the case where the error detection position is the transport packet payload, the processing section extracts and processes, in an 'as-is' manner, the transport packets provided beyond the error detection position in the payload of the baseband packet.
(4) The reception apparatus of feature (2), in which in the case where the error detection position is the transport packet header, the transport packet discards the transport packets provided beyond the error detection position in the payload of the baseband packet.
(5) The reception apparatus of any one of features (1) to (4), in which
   the error detection code is cyclic redundancy check (CRC: Cyclic Redundancy Check).
(6) The reception apparatus of any one of features (1) to (5), in which
   the transport packet is a packet of variable length,
   the baseband packet header includes a pointer that indicates a leading position of the transport packet,
   the transport packet header includes a data length of the transport packet, and
   positions where the plurality of transport packets provided in the payload of the baseband packet are provided are identified by the pointer and the data length.
(7) A data processing method of a reception apparatus, the data processing method including a step of:
   by the reception apparatus, performing an error detection process by using an error detection code included in a header of a transport packet, the plurality of transport packets being provided in a payload of a baseband packet that has gone through demodulation, the transport packets including the header and a payload, the header including the error detection code, the payload having an IP packet provided therein, the IP packet including a UDP packet.
(8) A transmission apparatus including:
   a processing section adapted to generate a transport packet provided in a payload of a baseband packet that has yet to go through modulation, the transport packet including a header and a payload, the header including an error detection code, the payload having an IP packet provided therein, the IP packet including a UDP packet, in which
   the processing section places the plurality of transport packets in the payload of the baseband packet.
(9) A data processing method of a transmission apparatus, the data processing method including the steps of:
   by the transmission apparatus,
   generating a transport packet provided in a payload of a baseband packet that has yet to go through modulation, the transport packet including a header and a payload, the header including an error detection code, the payload having an IP packet provided therein, the IP packet including a UDP packet, and
   placing the plurality of transport packets in the payload of the baseband packet.
(10) A reception apparatus including:
   a processing section adapted to process a baseband packet that has gone through demodulation, the baseband packet including a header and a payload, the header including an error detection code, the payload having a plurality of transport packets provided therein, the transport packets including a payload, the payload having an IP packet provided therein, the IP packet including a UDP packet, in which
   the processing section performs an error detection process by using the error detection code included in the baseband packet header.
(11) The reception apparatus of feature (10), in which
   the error detection code is cyclic redundancy check (CRC) .
(12) The reception apparatus of feature (10) or (11), in which
   the transport packet is a packet of variable length,
   the baseband packet header includes a pointer that indicates a leading position of the transport packet,
   the transport packet header includes a data length of the transport packet, and
   positions where the plurality of transport packets provided in the payload of the baseband packet are provided are identified by the pointer and the data length.
(13) A data processing method of a reception apparatus, the data processing method including a step of:
   by the reception apparatus, performing an error detection process by using an error detection code included in a header of a baseband packet that has gone through demodulation, the baseband packet including the header and a payload, the header including the error detection code, the payload having a plurality of transport packets provided therein, the transport packets including a payload, the payload having an IP packet provided therein, the IP packet including a UDP packet.
(14) A transmission apparatus including:
   a processing section adapted to generate a transport packet provided in a payload of a baseband packet that has yet to go through modulation, the transport packet including a payload, the payload having an IP packet provided therein, the IP packet including a UDP packet, in which
   the processing section places an error detection code in a header of the baseband packet and the plurality of transport packets in the payload of the baseband packet.
(15) A data processing method of a transmission apparatus, the data processing method including the steps of:
   by the transmission apparatus,
   generating a transport packet provided in a payload of a baseband packet that has yet to go through modulation, the transport packet including a payload, the payload having an IP packet provided therein, the IP packet including a UDP packet, and
   placing an error detection code in a header of the baseband packet and the plurality of transport packets in the payload of the baseband packet.

### [Reference Signs List]

1 Transport system, 10 Transmission apparatus, 20 Reception apparatus, 30 Transport path, 101 AV encoder, 102 FLUTE encoder, 103 UDP/IP packetizer, 104 ALP packetizer, 105 BB packetizer, 106 Scrambler, 107 BCH encoder, 108 LDPC encoder, 109 Parity interleaver, 110 Column twist interleaver, 111 Data mapper, 112 CQ delay section, 113 Cell interleaver, 114 Time interleaver, 115 Frame mapper, 116 Frequency interleaver, 117 OFDM transmission section, 118 RF output section, 201 RF input section, 202 OFDM reception section, 203 Frequency deinterleaver, 204 Frame demapper, 205 Time deinterleaver, 206 Cell deinterleaver, 207 CQ delay section, 208 Data demapper, 209 Column twist deinterleaver, 210 Parity deinterleaver, 211 LDPC decoder, 212 BCH decoder, 213 Descrambler, 214 BB depacketizer, 215 ALP depacketizer, 216 UDP/IP depacketizer, 217 FLUTE decoder, 218 AV decoder, 1000 Computer, 1001 CPU

## Claims

1. A reception apparatus comprising:
a processing section adapted to process a plurality of transport packets provided in a payload of a baseband packet that has gone through demodulation, the transport packets including a header and a payload, the header including an error detection code, the payload having an IP (Internet Protocol) packet provided therein, the IP packet including a UDP (User Datagram Protocol) packet, wherein
the processing section performs an error detection process by using the error detection code included in the transport packet header.

2. The reception apparatus of claim 1, wherein
in the case where an error is detected by the error detection process using the error detection code included in the transport packet header, the processing section performs a process corresponding to a detection position of the error.

3. The reception apparatus of claim 2, wherein
in the case where the error detection position is the transport packet payload, the processing section extracts and processes, in an 'as-is' manner, the transport packets provided beyond the error detection position in the payload of the baseband packet.

4. The reception apparatus of claim 2, wherein
in the case where the error detection position is the transport packet header, the transport packet discards the transport packets provided beyond the error detection position in the payload of the baseband packet.

5. The reception apparatus of claim 1, wherein
the error detection code is cyclic redundancy check (CRC: Cyclic Redundancy Check).

6. The reception apparatus of claim 1, wherein
the transport packet is a packet of variable length,
the baseband packet header includes a pointer that indicates a leading position of the transport packet,
the transport packet header includes a data length of the transport packet, and
positions where the plurality of transport packets provided in the payload of the baseband packet are provided are identified by the pointer and the data length.

7. A data processing method of a reception apparatus, the data processing method comprising a step of:
by the reception apparatus, performing an error detection process by using an error detection code included in a header of a transport packet, the plurality of transport packets being provided in a payload of a baseband packet that has gone through demodulation, the transport packets including the header and a payload, the header including the error detection code, the payload having an IP packet provided therein, the IP packet including a UDP packet.

8. A transmission apparatus comprising:
a processing section adapted to generate a transport packet provided in a payload of a baseband packet that has yet to go through modulation, the transport packet including a header and a payload, the header including an error detection code, the payload having an IP packet provided therein, the IP packet including a UDP packet, wherein
the processing section places the plurality of transport packets in the payload of the baseband packet.

9. A data processing method of a transmission apparatus, the data processing method comprising the steps of:
by the transmission apparatus,
generating a transport packet provided in a payload of a baseband packet that has yet to go through modulation, the transport packet including a header and a payload, the header including an error detection code, the payload having an IP packet provided therein, the IP packet including a UDP packet, and
placing the plurality of transport packets in the payload of the baseband packet.

10. A reception apparatus comprising:
a processing section adapted to process a baseband packet that has gone through demodulation, the baseband packet including a header and a payload, the header including an error detection code, the payload having a plurality of transport packets provided therein, the transport packets including a payload, the payload having an IP packet provided therein, the IP packet including a UDP packet, wherein
the processing section performs an error detection process by using the error detection code included in the baseband packet header.

11. The reception apparatus of claim 10, wherein
the error detection code is cyclic redundancy check (CRC) .

12. The reception apparatus of claim 10, wherein
the transport packet is a packet of variable length,
the baseband packet header includes a pointer that indicates a leading position of the transport packet,
the transport packet header includes a data length of the transport packet, and
positions where the plurality of transport packets provided in the payload of the baseband packet are provided are identified by the pointer and the data length.

13. A data processing method of a reception apparatus, the data processing method comprising a step of:
by the reception apparatus, performing an error detection process by using an error detection code included in a header of a baseband packet that has gone through demodulation, the baseband packet including the header and a payload, the header including the error detection code, the payload having a plurality of transport packets provided therein, the transport packets including a payload, the payload having an IP packet provided therein, the IP packet including a UDP packet.

14. A transmission apparatus comprising:
a processing section adapted to generate a transport packet provided in a payload of a baseband packet that has yet to go through modulation, the transport packet including a payload, the payload having an IP packet provided therein, the IP packet including a UDP packet, wherein
the processing section places an error detection code in a header of the baseband packet and the plurality of transport packets in the payload of the baseband packet.

15. A data processing method of a transmission apparatus, the data processing method comprising the steps of:
by the transmission apparatus,
generating a transport packet provided in a payload of a baseband packet that has yet to go through modulation, the transport packet including a payload, the payload having an IP packet provided therein, the IP packet including a UDP packet, and
placing an error detection code in a header of the baseband packet and the plurality of transport packets in the payload of the baseband packet.

## Amended claims

### Amended claims under Art. 19.1 PCT

1. (Amended) A reception apparatus comprising:
a processing section adapted to process a transport packet of variable length provided in a payload of a baseband packet, the transport packet including a header and a payload, the header including an error detection code and a data length, the payload having an IP (Internet Protocol) packet provided therein, the IP packet including a UDP (User Datagram Protocol) packet, wherein
a header of the baseband packet includes a pointer that indicates a leading position of the transport packet,
a position where the transport packet provided in the payload of the baseband packet is provided is identified by the pointer or by the pointer and the data length, and
the processing section performs an error detection process to identify, of the transport packets whose provision positions are identified by the pointer or by the pointer and the data length, the transport packet to be extracted by using the error detection code included in the transport packet header.

2. The reception apparatus of claim 1, wherein
in the case where an error is detected by the error detection process using the error detection code included in the transport packet header, the processing section performs a process corresponding to a detection position of the error.

3. The reception apparatus of claim 2, wherein
in the case where the error detection position is the transport packet payload, the processing section extracts and processes, in an 'as-is' manner, the transport packets provided beyond the error detection position in the payload of the baseband packet.

4. The reception apparatus of claim 2, wherein
in the case where the error detection position is the transport packet header, the transport packet discards the transport packets provided beyond the error detection position in the payload of the baseband packet.

5. The reception apparatus of claim 1, wherein
the error detection code is cyclic redundancy check (CRC: Cyclic Redundancy Check).

6. (Amended) The reception apparatus of claim 1, wherein
the transport packet is an ALP (ATSC Link-Layer Protocol) packet prescribed in ATSC (Advanced Television Systems Committee) 3.0.

7. (Amended) A data processing method of a reception apparatus, the data processing method comprising:
by the reception apparatus, a step of processing a transport packet of variable length provided in a payload of a baseband packet, the transport packet including a header and a payload, the header including an error detection code and a data length, the payload having an IP packet provided therein, the IP packet including a UDP packet;
a header of the baseband packet including a pointer that indicates a leading position of the transport packet;
a position where the transport packet provided in the payload of the baseband packet is provided being identified by the pointer or by the pointer and the data length; and
by the reception apparatus, a step of performing an error detection process to identify, of the transport packets whose provision positions are identified by the pointer or by the pointer and the data length, the transport packet to be extracted by using the error detection code included in the transport packet header.

8. (Amended) A transmission apparatus comprising:
a processing section adapted to generate a transport packet of variable length provided in a payload of a baseband packet, the transport packet including a header and a payload, the header including an error detection code and a data length, the payload having an IP packet provided therein, the IP packet including a UDP packet, wherein
the processing section puts a pointer indicating a leading position of the transport packet in a header of the baseband packet and places the transport packet in the payload of the baseband packet, and
a position where the transport packet provided in the payload of the baseband packet is provided is identified by the pointer or by the pointer and the data length.

9. (Amended) A data processing method of a transmission apparatus, the data processing method comprising the steps of:
by the transmission apparatus,
generating a transport packet of variable length provided in a payload of a baseband packet, the transport packet including a header and a payload, the header including an error detection code and a data length, the payload having an IP packet provided therein, the IP packet including a UDP packet, and
putting a pointer indicating a leading position of the transport packet in a header of the baseband packet and placing the transport packet in the payload of the baseband packet, wherein
a position where the transport packet provided in the payload of the baseband packet is provided is identified by the pointer or by the pointer and the data length.

10. (Amended) A reception apparatus comprising:
a processing section adapted to process a baseband packet, the baseband packet including a header and a payload, the header including an error detection code, the payload having a transport packet of variable length provided therein, the transport packet including a payload, the payload having an IP packet provided therein, the IP packet including a UDP packet, wherein
a header of the baseband packet includes a pointer that indicates a leading position of the transport packet,
the transport packet header includes a data length of the transport packet,
a position where the transport packet provided in the payload of the baseband packet is provided is identified by the pointer or by the pointer and the data length, and
the processing section performs an error detection process by using the error detection code included in the baseband packet header.

11. The reception apparatus of claim 10, wherein
the error detection code is cyclic redundancy check (CRC) .

12. (Amended) The transmission apparatus of claim 10, wherein
the transport packet is an ALP packet prescribed in ATSC 3.0.

13. (Amended) A data processing method of a reception apparatus, the data processing method comprising:
by the reception apparatus, a step of processing a baseband packet, the baseband packet including a header and a payload, the header including an error detection code, the payload having a transport packet of variable length provided therein, the transport packet including a payload, the payload having an IP packet provided therein, the IP packet including a UDP packet;
a header of the baseband packet including a pointer that indicates a leading position of the transport packet;
the transport packet header including a data length of the transport packet;
a position where the transport packet provided in the payload of the baseband packet is provided being identified by the pointer or by the pointer and the data length; and
by the reception apparatus, a step of performing an error detection process, by using the error detection code included in the baseband packet header.

14. (Amended) A transmission apparatus comprising:
a processing section adapted to generate a transport packet of variable length provided in a payload of a baseband packet, the transport packet including a header and a payload, the header including a data length, the payload having an IP packet provided therein, the IP packet including a UDP packet, wherein
the processing section places, in a header of the baseband packet, a pointer indicating a leading position of the transport packet and an error correction code and places the transport packet in the payload of the baseband packet, and
a position where the transport packet provided in the payload of the baseband packet is provided is identified by the pointer or by the pointer and the data length.

15. (Amended) A data processing method of a transmission apparatus, the data processing method comprising the steps of:
by the transmission apparatus,
generating a transport packet of variable length provided in a payload of a baseband packet, the transport packet including a header and a payload, the header including a data length, the payload having an IP packet provided therein, the IP packet including a UDP packet, and
placing, in a header of the baseband packet, a pointer indicating a leading position of the transport packet and an error correction code and placing the transport packet in the payload of the baseband packet, wherein
a position where the transport packet provided in the payload of the baseband packet is provided is identified by the pointer or by the pointer and the data length.

Statement under Art. 19.1 PCT
Claims 1 and 7 to 9 have clarified the purpose of an error detection process using an error detection code included in a transport packet header.

Claims 10 and 13 to 15 have clarified the purpose of an error detection process using an error detection code included in a baseband packet header.

Claims 6 and 12 have clarified that the transport packet is an ALP packet prescribed in ATSC 3.0.

The present technology is, for example, intended to particularly prevent useless discard of packets.
